(19) Europäisches Patentamt
European Patent Office
Office européen des brevets

(11) EP 3 794 664 B1

(12) # EUROPÄISCHE PATENTSCHRIFT

(45) Veröffentlichungstag und Bekanntmachung des Hinweises auf die Patenterteilung:
**06.10.2021 Patentblatt 2021/40**

(21) Anmeldenummer: **20746662.4**

(22) Anmeldetag: **30.07.2020**

(51) Int Cl.:
***H01M 10/0563*** (2010.01) ***H01M 10/0568*** (2010.01)
***H01M 10/0525*** (2010.01) ***H01M 4/587*** (2010.01)
***H01M 4/485*** (2010.01) ***H01M 4/38*** (2006.01)
***H01M 4/36*** (2006.01) *H01M 4/48* (2010.01)
*H01M 4/505* (2010.01) *H01M 4/525* (2010.01)
*H01M 4/58* (2010.01) *H01M 4/62* (2006.01)
*H01M 4/74* (2006.01) *H01M 4/80* (2006.01)
*H01M 10/054* (2010.01) *H01M 10/0567* (2010.01)

(86) Internationale Anmeldenummer:
**PCT/EP2020/071566**

(87) Internationale Veröffentlichungsnummer:
**WO 2021/019043 (04.02.2021 Gazette 2021/05)**

(54) **WIEDERAUFLADBARE BATTERIEZELLE**

RECHARGEABLE BATTERY CELL

CELLULE DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2019 EP 19189435**

(43) Veröffentlichungstag der Anmeldung:
**24.03.2021 Patentblatt 2021/12**

(73) Patentinhaber: **Innolith Technology AG**
**4052 Basel (CH)**

(72) Erfinder:
- **ZINCK, Laurent**
  **67470 Mothern (FR)**
- **RAPP, Manfred**
  **76131 Karlsruhe (DE)**
- **URBANSKI, Anna**
  **76646 Bruchsal (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**EP-A1- 2 999 037** **JP-A- 2001 143 750**
**JP-B2- 4 306 858** **US-A1- 2003 157 409**
**US-A1- 2014 220 428**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 794 664 B1

## Beschreibung

Die Erfindung betrifft eine wiederaufladbare Batteriezelle mit einem auf $SO_2$-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur aufweisen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können.

Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab. Auch der Elektrolyt ist ein wichtiges Funktionselement jeder wiederaufladbaren Batteriezelle. Er enthält meistens ein Lösungsmittel oder Lösungsmittelgemisch und mindestens ein Leitsalz. Feststoffelektrolyte oder ionische Flüssigkeiten enthalten zum Beispiel kein Lösungsmittel, sondern nur ein Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat enthalten. Der Elektrolyt LP57, der die Zusammensetzung 1 M $LiPF_6$ in EC (Ethylencarbonat) : EMC (Ethylmethylcarbonat) 3:7 aufweist, ist ein Beispiel für einen solchen Elektrolyten. Aufgrund des organischen Lösungsmittels oder Lösungsmittelgemischs werden derartige Lithium-Ionen-Zellen auch als organische Lithium-Ionen-Zellen bezeichnet.

Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze in Form von Tetraalkoxy- oder Tetraaryloxyboratsalzen, die fluoriert oder teilfluoriert sein können. Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organischen Lithium-Ionen-Zellen eingesetzt.

Die negative Elektrode vieler organischer Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die dazugehörige positive Elektrode besteht aus Lithiumkobaltoxid ($LiCoO_2$), welches auf ein Ableitelement aus Aluminium aufgetragen ist. Beide Elektroden weisen eine Dicke von in der Regel weniger als 100 $\mu$m auf und sind daher sehr dünn ausgebildet.

Es ist seit langem bekannt, dass das ungewollte Überladen von organischen Lithium-Ionen-Zellen zu einer

irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich.

Die überwiegende Mehrheit an Ladeprotokollen für diese organischen Lithium-Ionen-Zellen zieht die Zellspannung als Indikator für das Ladeende heran. Hierbei sind Unfälle durch einen Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Lithium ist das elektronegativste Metall (-3,10 V vs. Standard Wasserstoffelektrode, SHE) und folglich werden alle Materialien reduktiv daran umgesetzt, so zum Beispiel (z.B.) auch organische Elektrolyte der organischen Lithium-Ionen-Zelle. Diese reduktive Zersetzung des organischen Elektrolyten an der negativen Elektrode ist irreversibel. Keine organischen Lösungsmittel sind thermodynamisch stabil gegenüber Lithium oder gegenüber Lithium, welches in Kohlenstoff gespeichert ist ($Li_xC_6$). Viele Lösungsmittel bilden jedoch einen Passivierungsfilm auf der Elektrodenoberfläche der negativen Elektrode. Dieser Film trennt das Lösungsmittel räumlich von der Elektrode, ist aber ionisch leitfähig und ermöglicht so den Durchgang von Lithiumionen. Der Passivierungsfilm, die so genannte "Solid Electrolyte Interphase" (SEI), verleiht dem System Stabilität, wodurch die Herstellung von organischen Lithium-Ionen-Zellen ermöglicht wird. Bei der Bildung der SEI wird Lithium in den Passivierungsfilm integriert. Dieser Prozess ist irreversibel, wodurch ein Kapazitätsverlust beobachtet wird. Dieser irreversible Kapazitätsverlust, der auch als Deckschichtkapazität bezeichnet wird, hängt von der verwendeten Elektrolytformulierung und den verwendeten Elektroden ab. In organischen Lithium-Ionen-Zellen dauert die Elektrolytzersetzung und Bildung von Lithiumionen-enthaltenen Schichten während des weiteren Betriebs der organischen Lithium-Ionen-Zelle oft an und ist für den Kapazitätsverlust und damit für eine kürzere Lebenszeit der organischen Lithium-Ionen-Zelle verantwortlich. Auch während der Lagerung geladener organischer Lithium-Ionen-Zellen können Kapazitätsverluste auftreten. Diese sogenannte Selbstentladung können sowohl irreversiblen Prozesse, wie z.B. eine Elektrolytzersetzung, zugrunde liegen als auch reversible Prozesse, bei denen das in der negativen Elektrode gespeicherte Lithium in die Elektrolytlösung übergeht und beim nächsten Laden wieder zur Verfügung steht.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Ein weiterer Nachteil von organischen Lithium-Ionen-Zellen besteht darin, dass etwaige in Anwesenheit von Restmengen an Wasser entstehende Hydrolyseprodukte gegenüber den Zellkomponenten der wiederaufladbaren Batteriezelle sehr aggressiv sind. So entsteht beispielsweise bei dem häufig in organischen Zellen verwendeten Leitsalz $LiPF_6$ durch Reaktion mit Wasserspuren sehr reaktiver, aggressiver Fluorwasserstoff (HF). Aufgrund dessen muss bei der Herstellung derartiger wiederaufladbarer Batteriezellen mit einem organischen Elektrolyten auf eine Minimierung des im Elektrolyten und den Zellkomponenten enthaltenen Restwassergehalts geachtet werden. Die Produktion findet deshalb oft in kostenintensiven Trockenräumen mit extrem niedriger Luftfeuchtigkeit statt. Die zuvor beschriebenen Probleme im Hinblick auf die Stabilität und die langfristige Betriebssicherheit sind besonders schwerwiegend bei der Entwicklung von organischen Lithium-Ionen-Zellen, die zum einen sehr gute elektrische Energie- und Leistungsdaten und zum anderen eine sehr hohe Betriebssicherheit und Lebensdauer, insbesondere eine hohe Zahl nutzbarer Lade- und Entladezyklen aufweisen.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken,

welche durch die Brennbarkeit des Elektrolyten bestehen, können dadurch ausgeschlossen werden.

Beispielsweise offenbart die EP 2 999 037 A1 (bezeichnet als [V3]) eine wiederaufladbare Alkali-Ionen-Batterie mit einem auf $SO_2$-basierenden Elektrolyten mit beispielsweise der Zusammensetzung $LiAlCl_4$ * $SO_2$ in Kombination mit einer positiven Elektrode, die ein Metallchlorid, wie beispielsweise $CuCl_2$, und ein Alkalimetallchlorid, wie zum Beispiels NaCl, enthält. Die negative Elektrode kann ein Kohlenstoff-, Metall-, Legierungs- oder intermetallisches Material oder ein anorganisches Material umfassen. Die US 2003/157409 A1 (bezeichnet als [V4]) berichtet von einer sekundären Alkali-Ionen-Batterie, die ein Polymer-Elektrolyt-Separator-Element enthält. Der im Element enthaltene Elektrolyt kann beispielsweise ein auf $SO_2$-basierender Elektrolyt sein. Die negative Elektrode ist ein Insertionsmaterial aus Kohlenstoff.

Aus der EP 2 290 738 B1 (im Nachfolgenden bezeichnet als [V5]) geht ein auf $SO_2$-basierender Elektrolyt mit der Zusammensetzung $LiAlCl_4$ * $SO_2$ in Kombination mit einer negativen Elektrode aus Graphit und einer positiven Elektrode aus Lithiumcobaltoxid ($LiCoO_2$) hervor. Ein negativer Aspekt der Batteriezelle ist die Bildung einer Deckschicht auf dem Graphit im ersten Zyklus der Batteriezelle und ein damit verbundener Kapazitätsverlust. Aus Absatz [0008] der [V5] geht hervor, dass

"*[...] ein hoher Anteil des vor Beginn des Ladevorganges in der positiven Elektrode enthaltenen Lithiums (beispielsweise etwa 25 %) [...] beim ersten Ladevorgang für die Deckschichtbildung verbraucht*"

wird. In [V5] wird dieses Problem dadurch gelöst, dass das für die Bildung der Deckschicht erforderliche aktive Metall aus einem Zusatzvorrat zu einer der Elektroden übertragen wird.

Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierenden Elektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind. Messungen ergaben, dass $SO_2$ ein schlechtes Lösungsmittel für viele Leitsalze ist, wie z.B. Lithiumfluorid (LiF), Lithiumbromid (LiBr), Lithiumsulfat ($Li_2SO_4$), Lithium-bis(oxalato)borat (LiBOB), Lithiumhexafluoroarsenat ($LiAsF_6$), Lithiumtetrafluorborat ($LiBF_4$), Trilithiumhexafluoroaluminat ($Li_3AlF_6$,), Lithiumhexafluoroantimonat ($LiSbF_6$), Lithium Difluoro(oxalato)borat ($LiBF_2C_2O_4$), Lithium-bis(trifluoromethansulfonyl)imid (LiT-FSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Leitsalze liegen in $SO_2$ bei ca. $10^{-2}$ - $10^{-4}$ mol/L (siehe Tabelle 1). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Tabelle 1: Löslichkeiten verschiedener Leitsalze in $SO_2$

| Leitsalz | Löslichkeit / mol/L in $SO_2$ | Leitsalz | Löslichkeit / mol/L in $SO_2$ |
|---|---|---|---|
| LiF | $2{,}1\cdot10^{-3}$ | $LiPF_6$ | $1{,}5\cdot10^{-2}$ |
| LiBr | $4.9\cdot10^{-3}$ | $LiSbF_6$ | $2.8\cdot10^{-4}$ |
| $Li_2SO_4$ | $2.7\cdot10^{-4}$ | $LiBF_2(C_2O_4)$ | $1{,}4\cdot10^{-4}$ |
| $LiB(C_2O_4)_2$ | $3.2\cdot10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Um die Einsatzmöglichkeiten sowie Eigenschaften von wiederaufladbaren Batteriezellen, die einen auf $SO_2$-basierenden Elektrolyten enthalten, weiter zu verbessern, liegt der vorliegenden Erfindung die Aufgabe zugrunde, eine wiederaufladbare Batteriezelle mit auf $SO_2$-basierenden Elektrolyten anzugeben, die gegenüber den aus dem Stand der Technik bekannten wiederaufladbaren Batteriezellen

- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf $SO_2$-basierenden Elektrolyten enthält, der eine für Leitsalze gute Löslichkeit aufweist und damit ein guter

Ionenleiter und elektronischer Isolator ist, damit der Ionentransport erleichtert und die Selbstentladung auf ein Minimum beschränkt werden kann;

- einen auf $SO_2$-basierenden Elektrolyten enthält, der auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist;
- einen auf $SO_2$-basierenden Elektrolyten enthält, der eine gesteigerte Stabilität gegenüber Restmengen an Wasser in den Zellkomponenten von wiederaufladbaren Batteriezellen aufweist;
- verbesserte elektrische Leistungsdaten, insbesondere eine hohe Energiedichte aufweist;
- eine verbesserte Überladefähigkeit und Tiefentladefähigkeit und eine geringere Selbstentladung aufweist und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen aufweisen, ohne dass sich hierbei der Elektrolyt im Betrieb der wiederaufladbaren Batteriezelle zersetzt.

Gelöst wird diese Aufgabe durch eine wiederaufladbare Batteriezelle mit den Merkmalen des Anspruchs 1. Die Ansprüche 2 bis 30 beschreiben vorteilhafte Weiterbildungen der erfindungsgemäßen wiederaufladbaren Batteriezelle.

Eine erfindungsgemäße wiederaufladbare Batteriezelle umfasst ein aktives Metall, zumindest eine positive Elektrode, zumindest eine negative Elektrode, ein Gehäuse und einen Elektrolyten. Die negative Elektrode enthält ein aktives Material, das ausgewählt ist aus der Gruppe, die gebildet wird von

- einem Insertionsmaterial aus Kohlenstoff,
- einem Legierungsbildenden-Aktivmaterial,
- einem Interkalationsmaterial, das keinen Kohlenstoff enthält, und
- einem Konversions-Aktivmaterial.

Der Elektrolyt basiert auf $SO_2$ und enthält zumindest ein erstes Leitsalz. Dieses erste Leitsalz weist die Formel (I)

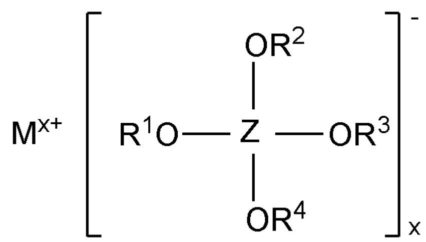

Formel (I)

auf. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^1$, $R^2$, $R^3$ und $R^4$ sind unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl. Das Zentralatom Z ist entweder Aluminium oder Bor.

Unter dem Begriff "Insertionsmaterialien aus Kohlenstoff" werden im Sinne der vorliegenden Erfindung Materialien aus dem Element Kohlenstoff verstanden, die eine Struktur aufweisen, in die Ionen des aktiven Metalls beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Struktur abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden.

Bei den Legierungsbildenden-Aktivmaterialien handelt es sich im Allgemeinen um Metalle und Metalllegierungen sowie deren Oxide, die mit dem aktiven Metall, wie z.B. Lithium, eine Legierung bilden, wobei diese Legierungsbildung in oder an der negativen Elektrode stattfindet und im Wesentlichen reversibel ist. Im Gegensatz zu Insertionsmaterialien wird das aktive Metall in den Legierungen nicht in eine bereits existente Struktur eingelagert. Die Einlagerung des aktiven Metalls erfolgt vielmehr über Phasenumwandlungsprozesse, die beispielsweise bei Verwendung von Lithium als aktives Metall zu einem lithiumhaltigen, binären Endprodukt führen können. Bei der Legierungsbildung kann es zu einer Ausdehnung des aktiven Materials kommen.

Unter dem Begriff "Interkalationsverbindung" ist im Sinne der vorliegenden Erfindung eine Unterkategorie der

zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Konversions-Aktivmaterialien durchlaufen während der Elektrodenprozesse eine chemische Konversion bzw. Umwandlung, die zu der reversiblen Bildung einer chemischen Verbindung zwischen dem aktiven Metall und dem aktiven Material führt.

Der in der erfindungsgemäßen wiederaufladbaren Batteriezelle verwendete auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen. Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_5$-$C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein wiederaufladbare Batteriezelle mit einem derartigen Elektrolyt hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, bevorzugt mindestens bis zu einem oberen Potential von 4,4 Volt, weiter bevorzugt mindestens bis zu einem oberen Potential von 4,8 Volt, weiter bevorzugt mindestens bis zu einem oberen Potential von 5,2 Volt, weiter bevorzugt mindestens bis zu einem oberen Potential von 5,6 Volt und besonders bevorzugt mindestens bis zu einem oberen Potential von 6,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, also im Bereich zwischen der Ladeschlussspannung und der Entladeschlussspannung, beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen.

Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle.
Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

Negative Elektrode

Nachfolgend sind vorteilhafte Weiterbildungen der erfindungsgemäßen wiederaufladbaren Batteriezelle im Hinblick auf die negative Elektrode beschrieben:
Eine erste vorteilhafte Weiterbildung der erfindungsgemäßen wiederaufladbaren Batteriezelle sieht vor, dass die negative Elektrode mit Lithium Legierungsbildende-Anodenaktivmaterialien umfasst, insbesondere Silizium. Mit anderen Worten bildet Lithium in seiner Funktion als aktives Metall eine Legierung mit dem Legierungsbildenden-Aktivmaterial.

Eine weitere vorteilhaften Weiterbildung der erfindungsgemäßen wiederaufladbaren Batteriezelle sieht vor, dass das Insertionsmaterial aus Kohlenstoff ausgewählt ist aus der Gruppe, die gebildet wird von Graphit, Naturgraphit, synthetischem Graphit, graphitiertem MesoCarbon MicroBeads (Abk.: MCMB), kohlenstoffbeschichtetem Graphit und amorphem Kohlenstoff. Eine Insertionsmaterial aus Kohlenstoff in der Modifikation Graphit ist bevorzugt. Naturgraphit kann flockenförmig (als sog. Flocken-Fördermittel) oder gerundet ausgebildet sein. Synthetischer Graphit, auch als graphitierter Kohlenstoff oder Elektrographit bezeichnet, kann durch Graphitierung von nicht-graphitischem Kohlenstoff, durch chemische Gasphasenabscheidung von Kohlenwasserstoffen bei Temperaturen über 2500 K, durch Zersetzung von chemisch instabilen Carbiden oder durch Kristallisation aus kohlenstoff-übersättigten Metallschmelzen hergestellt und aufgrund seiner im Vergleich zu Naturgraphiten u.a. gleichmäßigeren Struktur und höheren Reinheit bevorzugt als Anodenmaterial eingesetzt werden. Graphitierte MesoCarbon MicroBeads (MCMB) haben vorzugsweise eine fast kugelförmige Struktur mit einem Durchmesser von z.B. 1 - 40 $\mu$m und daraus folgend eine geringe spezifische Oberfläche. MesoCarbon MicroBeads zählen zu den sogenannten "soft carbon".Es liegt im Rahmen der Erfindung, dass auch der Einsatz von Kohlestofffasern, wie z.B. Mesophasenpech-basierten Kohlenstofffasern (in Engl.: mesophase-pitch-based carbon fibres; Abk.: MCF) oder in der Dampfphase gewachsene Kohlenstofffasern (in Engl.: vapor grown carbon fibres, Abk.: VGCF) als mögliche aktive Materialien der negativen Elektrode vorgesehen werden können. Der zuvor genannte amorphe Kohlenstoff weist keine kristalline Fernordnung auf. Beispiele dafür sind graphitierbarer (soft carbon) und nicht graphitierbarer (hard carbon) Kohlenstoff.

Eine weitere vorteilhafte Weiterbildung der erfindungsgemäßen wiederaufladbaren Batteriezelle sieht vor, das das Legierungsbildende-Aktivmaterial ausgewählt ist aus der Gruppe, die gebildet wird von Lithium speichernden Metallen und Metalllegierungen oder aus der Gruppe, die gebildet wird von Oxiden der Lithium speichernden Metalle und Metalllegierungen. Hierzu gehören bevorzugt Silizium (Si), insbesondere nano-Silicium, $\mu$m-Silicium, Silicium Nanofasern, Germanium (Ge), Zinn (Sn), $SnCo_xC_y$, $SnSi_x$ und dergleichen sowie deren Oxide wie z.B. $SnO_x$, $SiO_x$, oxidische Gläser von Sn und Si und dergleichen. Oxide der Zusammensetzung $MO_x$, worin M das Metall darstellt, wie z.B. $SiO_x$, bestehen aus einem Gemisch des Elements und seiner Oxide. $SiO_x$ besteht beispielsweise aus einem Gemisch der Bestandteile Si, SiO und $SiO_2$. Dabei können die Gewichtsanteile der einzelnen Bestandteile variieren. In der nachfolgenden Tabelle 2 sind theoretische Kapazitäten einiger dieser Legierungsbildenden-Anodenaktivmaterialien angegeben:

Tabelle 2: Theoretische Kapazitäten von Legierungsbildenden-Anodenaktivmaterialien im Vergleich mit Graphit

| Metall | Graphit | Li | Si | Ge | Al | Sn |
|---|---|---|---|---|---|---|
| Lithiumhaltige Verbindung | LiC6 | Li | Li22Si5 | Li22Ge5 | AlLi | Li22Sn5 |
| Theoretische Kapazität (mAh.g-1) | 372 | >3800 | >3000 | 1600 | 993 | 994 |

Eine weitere vorteilhafte Weiterbildung der erfindungsgemäßen wiederaufladbaren Batteriezelle sieht vor, dass das Legierungsbildende-Anodenaktivmaterial ein auf Silizium basiertes Anodenaktivmaterial ist. Dieses weist eine sehr

hohe theoretischen Kapazität auf.

Eine weitere vorteilhafte Weiterbildung der erfindungsgemäßen wiederaufladbaren Batteriezelle sieht vor, dass das Legierungsbildenden-Aktivmaterial aus Silizium oder aus Siliziumoxiden oder aus Mischungen von Silizium und Siliziumoxiden ausgebildet ist.

Auf Silizium basierte Anodenaktivmaterialien können beispielsweise entsprechend ihrer Partikelgeometrie bzw. Morphologie in 0D, 1D, 2D und 3D Materialien klassifiziert werden. Zu den 0D Silizium-Materialien zählen z.B. Silizium Nanopartikel mit einer Partikelgröße <150 nm, welche sich bei der elektrochemischen Zyklisierung ausdehnen können, ohne irgendwelche Schäden zu zeigen. 1D-Nanostäbchen, Nanodrähte und Nanoröhren aus Silizium bieten entlang des 1D-Transportkanals eine gute Leitfähigkeit aufgrund der Tatsache, dass sie im Elektrodenverbund in der Regel direkt an den Stromableiter angebunden sind. Die Gruppe der 2D-Siliziummaterialien beinhaltet z.B. Dünnfilme und Nanoplatten aus Silizium, welche im Allgemeinen eine hohe Kapazität aufweisen. Dabei zeigt sich, dass mit abnehmender Schicht-Dicke die reversible Kapazität und die elektrochemische Zykelstabilität zunehmen. 3D Si-basierte poröse Strukturen und Netzwerke können der volumetrischen Änderungen aufgrund ihres porösen Charakters entgegenkommen und damit ihre strukturelle Integrität erhalten. Gleichzeitig weisen diese Materialien eine höhere Klopfdichte und damit theoretisch höhere volumetrische Kapazitäten als Nanostrukturen von geringerer Dimensionalität auf.

Eine weitere vorteilhafte Weiterbildung der erfindungsgemäßen wiederaufladbaren Batteriezelle sieht vor, dass die mit Lithium Legierungsbildende-Anodenaktivmaterialien schon vor der Verwendung in einer Batteriezelle Lithium enthalten. Diese sogenannte Pre-Lithiierung verringert die Kapazitätsverluste z.B. durch die Deckschichtbildung im ersten Zyklus.

Eine weitere vorteilhafte Weiterbildung der erfindungsgemäßen wiederaufladbaren Batteriezelle sieht vor, dass die negative Elektrode zumindest ein Legierungsbildendes-Anodenaktivmaterial, insbesondere zumindest eine mit Lithium Legierungsbildendes-Anodenaktivmaterial, in Kombination mit zumindest einem Insertionsmaterial aus Kohlenstoff enthält. Bevorzugt sind Kombinationen von Silizium und/oder Siliziumoxiden und Graphit. Darunter fallen z.B. Komposite, die mechanisch stabile Verbunde bilden. Die Materialien sind ineinander eingebettet. Die Kombination kann auch in Form von losen Gemischen, sogenannten Blends, erfolgen. Kombiniert werden können z.B. Silizium und Graphit oder $SiO_x$ und Graphit.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).

In einer weiteren vorteilhaften Weiterbildung der erfindungsgemäßen wiederaufladbaren Batteriezelle ist das Anodenaktivmaterial ein Konversions-Aktivmaterial ausgewählt

- aus der Gruppe, die gebildet wird von Manganoxiden ($MnO_x$), Eisenoxiden ($FeO_x$), Cobaltoxiden ($CoO_x$), Nickeloxiden ($NiO_x$), Kupferoxiden ($CuO_x$), oder
- aus der Gruppe, die gebildet wird von Magnesiumhydrid ($MgH_2$), Titanhydrid ($TiH_2$), Aluminiumhydrid ($AlH_3$) und Bor-, Aluminium- und Magnesium-basierten ternären Hydriden

und dergleichen.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 $\mu$m bis 20$\mu$m auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m

ist bevorzugt. Bei der Verwendung von planaren Ableitelementen kann die negative Elektrode eine Gesamtdicke von mindestens 20 μm, bevorzugt mindestens 40 μm und besonders bevorzugt mindestens 60 μm aufweisen. Die maximalen Dicke beträgt höchstens 200 μm, bevorzugt höchstens 150 μm und besonders bevorzugt höchstens 100 μm. Die flächenspezifische Kapazität der negativen Elektrode bezogen auf die Beschichtung einer Seite weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$. Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachten aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$, 55 $mAh/cm^2$, 65 $mAh/cm^2$, 75 $mAh/cm^2$. Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der negativen Elektrode wirkt sich positiv auf den Ladevorgang sowie den Entladevorgang der wiederaufladbaren Batteriezelle aus.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche aufweisen, Beispiele für Leitfähigkeitsadditive sind partikulärer Kohlenstoff (carbon black, Super P, acetylen black), faserartiger Kohlenstoff (CarbonNanoTtubes CNT, Kohelnstoff(nano)fasern), feinverteilte Graphite und Graphen(-Nanos-heets).

Elektrolyt

Nachfolgend sind vorteilhafte Weiterbildungen der wiederaufladbaren Batteriezelle im Hinblick auf den auf $SO_2$-basierenden Elektrolyten beschrieben.

In einer weiteren vorteilhaften Ausgestaltung der wiederaufladbaren Batteriezellen sind die Substituenten $R^1$, $R^2$, $R^3$ und $R^4$ des ersten Leitsalzes unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des auf $SO_2$-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.
Der Begriff "$C_2$-$C_6$ Alkenyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl.

Der Begriff "$C_2$-$C_6$-Alkinyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind $C_2$-$C_4$-Alkinyle.
Der Begriff "$C_3$-$C_6$ Cycloalkyl" umfasst im Fall dieser vorteilhaften Ausgestaltung des auf $SO_2$-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.
Der Begriff "$C_5$-$C_7$ Heteroaryl" umfasst im Fall dieser vorteilhaften Ausgestaltung des auf $SO_2$-basierenden Elektrolyten Phenyl und Naphtyl.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Weiterbildung der wiederaufladbaren Batteriezelle ist das erste Leitsalz ausgewählt aus der Gruppe, die gebildet wird von

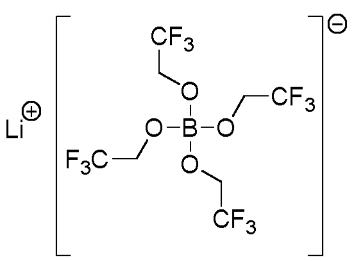

$Li[B(OCH_2CF_3)_4]$

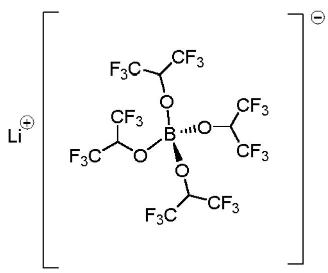

$Li[B(OCH(CF_3)_2)_4]$

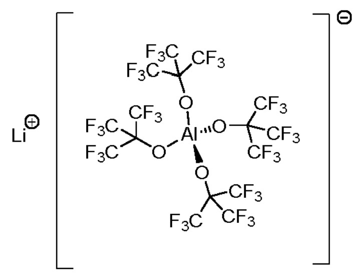

$Li[Al(OC(CF_3)_3)_4]$

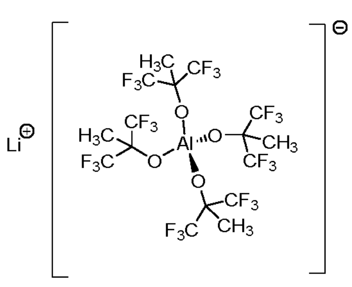

$Li[Al(OC(CH_3)(CF_3)_2)_4]$

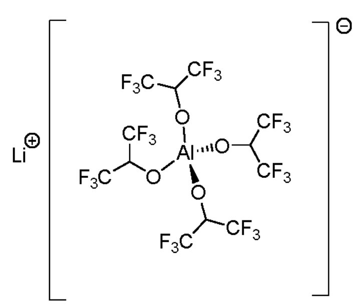

$Li[Al(OCH(CF_3)_2)_4]$.

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetraf-luor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden.

Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew%

$SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.
Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

Aktives Metall

Nachfolgend sind vorteilhafte Weiterbildungen der erfindungsgemäßen wiederaufladbaren Batteriezelle im Hinblick auf das aktive Metall beschrieben:
In einer ersten vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Positive Elektrode

Nachfolgend sind vorteilhafte Weiterbildungen der erfindungsgemäßen wiederaufladbaren Batteriezelle im Hinblick auf die positive Elektrode beschrieben:
Eine erste vorteilhafte Weiterbildung der erfindungsgemäßen wiederaufladbaren Batteriezelle sieht vor, dass die positive Elektrode mindestens bis zu einem oberen Potenzial von 4,0 Volt, bevorzugt bis zu einem Potenzial von 4,4 Volt weiter bevorzugt von mindestens einem Potenzial von 4,8 Volt, weiter bevorzugt mindestens bis zu einem Potenzial von 5,2 Volt, weiter bevorzugt mindestens bis zu einem Potenzial von 5,6 Volt und besonders bevorzugt mindestens bis zu einem Potenzial von 6,0 Volt ladbar ist.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls speichern und während des Betriebs der Batteriezelle die Ionen des aktiven Metalls abgeben und wieder aufnehmen.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladbaren Batteriezelle die Zusammensetzung $A_xM'_yM''_zO_a$ auf. In dieser Zusammensetzung $A_xM'_yM''_zO_a$ sind

- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall, das ausgewählt ist aus der Gruppe, die gebildet wird von den Elementen Ti, V, Cr, Mn, Fe, Co, Ni, Cu und Zn;
- M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0;
- z eine Zahl größer oder gleich 0; und
- a eine Zahl größer 0.

A ist vorzugsweise das Metall Lithium, d.h. die Verbindung kann die Zusammensetzung $Li_xM'_yM"_zO_a$ aufweisen.

Die Indizes y und z in der Zusammensetzung $A_xM'_yM"_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1+y2, wobei y1 und y2 die Indizes der Metalle $M'^1$ und $M'^2$ darstellen. Die Indizes x, y, z und a müssen so gewählt werden, dass eine Ladungsneutralität innerhalb der Zusammensetzung herrscht. Beispiele für Verbindungen bei denen M' zwei Metalle umfasst sind Lithiumnickelmangancobaltoxide der Zusammensetzung $Li_xNi_{y1}Mn_{y2}Co_zO_2$ mit $M'^1$=Ni, $M'^2$=Mn und M"=Co. Beispiele für Verbindungen in denen z=0 ist, die also kein weiteres Metall oder Element M" aufweisen sind Lithiumkobaltoxide $Li_xCo_yO_a$. Umfasst zum Beispiel M" zwei Elemente, zum einen ein Metall $M"^1$ und zum anderen Phosphor als $M"^2$, so gilt für den Index z: z=z1+z2, wobei z1und z2 die Indizes des Metalls $M"^1$ und des Phosphors ($M"^2$) darstellen. Die Indizes x, y, z und a müssen so gewählt werden, dass eine Ladungsneutralität innerhalb der Zusammensetzung herrscht. Beispiele für Verbindungen bei denen A Lithium, M" ein Metall $M"^1$ und Phosphor als $M"^2$ umfasst sind Lithiumeisenmanganphosphate $Li_xFe_yMn_{z1}P_{z2}O_4$ mit A=Li, M'=Fe, $M"^1$=Mn und $M"^2$=P und z2=1. In einer weiteren Zusammensetzung kann M" zwei Nichtmetalle, zum Beispiel Fluor als $M"^1$ und Schwefel als $M"^2$, umfassen. Beispiele für solche Verbindungen sind Lithiumeisenfluorsulfate $Li_xFe_yF_{z1}S_{z2}O_4$ mit A= Li, M'=Fe, $M"_1$=F und $M"_2$=P.

Eine weitere vorteilhafte Weiterbildung der erfindungsgemäßen wiederaufladbaren Batteriezelle sieht vor, dass M' aus den Metallen Nickel und Mangan besteht und M" Cobalt ist, sodass die Verbindung die Formel $Li_xNi_{y1}Mn_{y2}Co_zO_a$, aufweist, wobei y1 und y2 unabhängig voneinander Zahlen größer 0 sind. Es kann sich dabei um Zusammensetzungen der Formel $Li_xNi_{y1}Mn_{y2}Co_zO_2$ (NMC) handeln, d.h. um Lithiumnickelmangancobaltoxide, die die Struktur von Schichtoxiden aufweisen. Beispiele für diese aktiven Materialien aus Lithiumnickelmangancobaltoxid sind $LiNi_{1/3}Mn_{1/3}Co_{1/3}O_2$ (NMC111), $LiNi_{0.6}Mn_{0.2}Co_{0.2}O_2$ (NMC622) und $LiNi_{0.8}Mn_{0.1}Co_{0.1}O_2$ (NMC811). Weitere Verbindungen aus Lithiumnickelmangancobaltoxid können die Zusammensetzung $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,15}Co_{0,15}O_2$, $LiNi_{0,72}Mn_{0,10}Co_{0,18}O_2$, $LiNi_{0,76}Mn_{0,14}Co_{0,10}O_2$, $LiNi_{0,86}Mn_{0,04}Co_{0,10}O_2$, $LiNi_{0,90}Mn_{0,05}Co_{0,05}O_2$, $LiNi_{0,95}Mn_{0,025}Co_{0,025}O_2$ oder eine Kombination davon aufweisen. Mit diesen Verbindungen lassen sich positive Elektroden für wiederaufladbare Batteriezellen mit einer Zellspannung von über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (in Engl.: Lithium- and Manganese-Rich Oxide Material). Dieses Metalloxid kann die Zusammensetzung $Li_xMn_yM"_zO_a$ aufweisen. M' stellt in der oben beschriebenen Formel $Li_xM'_yM"_zO_a$ somit das Metall Mangan (Mn) dar. Der Index x ist hier größer oder gleich 1, der Index y ist größer als der Index z bzw. größer als die Summe der Indizes z1+z2+z3 etc.. Umfasst z.B. M" zwei Metalle $M"^1$ und $M"^2$ mit den Indizes z1 und z2 (z.B. $Li_{1.2}Mn_{0.525}Ni_{0.175}Co_{0.1}O_2$ mit $M"^1$=Ni z1=0,175 und $M"^2$=Co z2=0,1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_3\cdot(1-m)LiM'O_2$ mit 0 < m <1 beschrieben werden. Beispiele für derartige Verbindungen sind $Li_{1.2}Mn_{0.525}Ni_{0.175}Co_{0.1}O_2$, $Li_{1.2}Mn_{0.6}Ni_{0.2}O_2$ oder $Li_{1.2}Ni_{0.13}Co_{0.13}Mn_{0.54}O_2$.

Eine weitere vorteilhafte Weiterbildung der erfindungsgemäßen wiederaufladbaren Batteriezelle sieht vor, dass die Zusammensetzung die Formel $A_xM'_yM"_zO_4$ aufweist. Bei diesen Verbindungen handelt es sich um Spinell-Strukturen. Zum Beispiel können A Lithium, M' Kobalt und M" Mangan sein. In diesem Fall handelt es sich bei dem aktiven Material um Lithiumcobaltmanganoxid ($LiCoMnO_4$). Mit $LiCoMnO_4$ lassen sich positive Elektroden für wiederaufladbare Batteriezellen mit einer Zellspannung von über 4,6 Volt herstellen. Dieses $LiCoMnO_4$ ist vorzugsweise $Mn^{3+}$frei. In einem weiteren Beispiel können M' Nickel und M" Mangan sein. In diesem Fall handelt es sich bei dem aktiven Material um Lithiumnickelmanganoxid ($LiNiMnO_4$). Die molaren Anteile der beiden Metalle M' und M" können variieren. Lithiumnickelmanganoxid kann zum Beispiel die Zusammensetzung $LiNi_{0,5}Mn_{1,5}O_4$ aufweisen.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Lithium oder Natrium, eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

Typ A: $MX_z + y\,Li \leftrightarrow M + z\,Li_{(y/z)}X$

Typ B: $X + y\,Li \leftrightarrow Li_yX$

Beispiele für Umwandlungsverbindungen sind $FeF_2$, $FeF_3$, $CoF_2$, $CuF_2$, $NiF_2$, $BiF_3$, $FeCl_3$, $FeCl_2$, $CoCl_2$, $NiCl_2$, $CuCl_2$, AgCl, LiCl, S, $Li_2S$, Se, $Li_2Se$, Te, I und LiI.

In einer weiteren vorteilhaften Weiterbildung weist die Verbindung die Zusammensetzung $A_xM'_yM''^1_{z1}M''^2_{z2}O_4$ auf, wobei $M''^1$ mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ Phosphor ist, z1 eine Zahl größer oder gleich 0 ist und z2 den Wert 1 hat. Bei der Verbindung mit der Zusammensetzung $Li_xM'_yM''_{z1}M''_{z2}O_4$ handelt es sich um sogenannte Lithiummetallphosphate. Insbesondere weist diese Verbindung die Zusammensetzung $Li_xFe_yMn_{z1}P_{z2}O_4$ auf. Beispiele für Lithiummetallphosphate sind Lithiumeisenphosphat ($LiFePO_4$) oder Lithiumeisenmanganphosphate ($Li(Fe_yMn_z)PO_4$). Ein Beispiel für ein Lithiumeisenmanganphosphat ist das Phosphat der Zusammensetzung $Li(Fe_{0.3}Mn_{0.7})PO_4$. Ein Beispiel für ein Lithiumeisenmanganphosphat ist das Phosphat der Zusammensetzung $Li(Fe_{0.3}Mn_{0.7})PO_4$.Auch Lithiummetallphosphate anderer Zusammensetzungen können für die erfindungsgemäße Batteriezelle verwendet werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass die positive Elektrode zumindest eine Metallverbindung enthält, die die chemische Struktur eines Spinells, eines Schichtoxids, einer Umwandlungsverbindung oder einer Polyanionischen Verbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 μm bis 20μm auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 μm bis 50 μm auf. Eine Dicke des planaren Ableitelements im Bereich von 10 μm bis 30 μm ist bevorzugt. Bei der Verwendung von planaren Ableitelementen kann die positive Elektrode eine Gesamtdicke von mindestens 20 μm, bevorzugt mindestens 40 μm und besonders bevorzugt mindestens 60 μm aufweise. Die maximalen Dicke beträgt höchstens 200 μm, bevorzugt höchstens 150 μm und besonders bevorzugt höchstens 100 μm. Die flächenspezifische Kapazität der positiven Elektrode bezogen auf die Beschichtung einer Seite weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 mAh/cm$^2$ beträgt, wobei folgende Werte in dieser Reihenfolge weiter bevorzugt sind: 5 mAh/cm$^2$, 15 mAh/cm$^2$, 25 mAh/cm$^2$, 35 mAh/cm$^2$, 45 mAh/cm$^2$, 55 mAh/cm$^2$, 65 mAh/cm$^2$, 75 mAh/cm$^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 mg/cm$^2$, bevorzugt mindestens 20 mg/cm$^2$, weiter bevorzugt mindestens 40 mg/cm$^2$, weiter bevorzugt mindestens 60 mg/cm$^2$, weiter bevorzugt mindestens 80 mg/cm$^2$ und besonders bevorzugt mindestens 100 mg/cm$^2$. Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.
Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE).
Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.
Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.
Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.
Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.
Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig

bedeckende Schichten der Umhüllung können daher am Rand der positiven Elektrode durch eine Randverbindung miteinander verbunden werden.
In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt das Potenzial in [V] von vier Test-Vollzellen beim Laden der negativen Elektroden mit Graphit 1, Graphit 2, Graphit 3 und Graphit 4 als aktives Elektrodenmaterial als Funktion der Kapazität, während einer Deckschichtbildung auf der negativen Elektrode;

Figur 7: zeigt die Entladekapazität als Funktion der Zykelzahl von drei Test-Vollzellen, die Graphit 1, Graphit 2 und Graphit 3 als aktives Elektrodenmaterial der negativen Elektrode enthalten;

Figur 8: zeigt das Potenzial in [V] von zwei Test-Vollzellen beim Laden der negativen Elektroden mit Graphit 1 als aktives Elektrodenmaterial als Funktion der Kapazität, während einer Deckschichtbildung auf der negativen Elektrode, wobei eine Referenz-Test-Vollzelle mit dem Referenzelektrolyten befüllt ist und eine Test-Vollzelle mit dem Elektrolyten 1 befüllt ist;

Figur 9: zeigt die Entladekapazität als Funktion der Zykelzahl von zwei Test-Vollzellen, die Graphit 1 als aktives Elektrodenmaterial der negativen Elektrode enthalten, wobei eine Referenz-Test-Vollzelle mit dem Referenzelektrolyten befüllt ist und eine Test-Vollzelle mit dem Elektrolyten 1 befüllt ist;

Figur 10: zeigt das Potenzial in [V] von drei Halbzellen beim Laden der negativen Elektroden mit Graphit 2, Graphit 3 und Graphit 4, als aktives Elektrodenmaterialien als Funktion der Kapazität, während einer Deckschichtbildung auf der negativen Elektrode, wobei die Halbzellen mit dem Referenzelektrolyten befüllt sind;

Figur 11: zeigt das Potenzial in [V] von zwei Test-Vollzellen beim Laden der negativen Elektroden mit Graphit 1 als aktives Elektrodenmaterial als Funktion der Kapazität, während einer Deckschichtbildung auf der negativen Elektrode, wobei eine Test-Vollzelle mit dem Elektrolyten 3 und eine Test-Vollzelle mit dem Elektrolyten 4 befüllt ist;

Figur 12: zeigt das Potenzial in [V] bei der Entladung als Funktion der prozentualen Ladung von drei Test-Vollzellen, die Graphit 1 als aktives Elektrodenmaterial der negativen Elektrode enthalten und mit den Elektrolyten 1, 3 und 4 befüllt wurden;

Figur 13: zeigt das Potenzial in [V] von drei Test-Vollzellen beim Laden der negativen Elektroden mit Mischungen von $SiO_x$ 5,0%/ Graphit 3, $SiO_x$ 17,3%/ Graphit 3 und $SiO_x$ 24,0%/ Graphit 3 als aktive Elektrodenmaterialien als Funktion der Kapazität, während einer Deckschichtbildung auf der negativen Elektrode;

Figur 14: zeigt die Entladekapazität der ersten zehn Zyklen bei der Entladung als Funktion der Zykelzahl von drei Test-Vollzellen die Mischungen von $SiO_x$ 5,0%/ Graphit 3, $SiO_x$ 17,3%/ Graphit 3 und $SiO_x$ 24,0%/ Graphit 3 als aktives Material der negativen Elektrode enthalten;

Figur 15: zeigt das Potenzial in [V] von vier Test-Vollzellen beim Laden der negativen Elektroden mit einem Gemisch aus Nano-Silizium (5 wt%) und Graphit 3 (95 wt%), einem Gemisch aus Nano-Silizium (2,5 wt%) und Graphit 1 (97,5 wt%), einem Gemisch aus Nano-Silizium (5,0 wt%) und Graphit 1 (95,0 wt%) und einem Gemisch aus Nano-Silizium (10 wt%) und Graphit 1 (90 wt%) als aktives Elektrodenmaterialien als Funktion der Kapazität, während einer Deckschichtbildung auf der negativen Elektrode;

Figur 16: zeigt die Entladekapazität der ersten zehn Zyklen bei der Entladung als Funktion Zykelzahl von vier Test-Vollzellen die ein Gemisch aus Nano-Silizium (5 wt%) und Graphit 3 (95 wt%), ein Gemisch aus Nano-Silizium (2,5 wt%) und Graphit 1 (97,5 wt%), ein Gemisch aus Nano-Silizium (5,0 wt%) und Graphit 1 (95,0 wt%) und ein Gemisch aus Nano-Silizium (10 wt%) und Graphit 1 (90 wt%) als aktives Elektrodenmaterial der negativen Elektrode enthalten;

Figur 17: zeigt die Leitfähigkeit in [mS/cm] des Elektrolyten 1 in Abhängigkeit von der Konzentration;

Figur 18: zeigt die Leitfähigkeit in [mS/cm] des Elektrolyten 3 in Abhängigkeit von der Konzentration; und

Figur 19: zeigt die Leitfähigkeit in [mS/cm] des Elektrolyten 4 in Abhängigkeit von der Konzentration.

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoMnO_4$. Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 $\mu m$ haben, also verhältnismäßig groß sind. Bei diesem Metallschaum handelt es sich um einen Metallschaum aus Nickel.

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden

22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 $\mu$m auf.

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Beispiel 1: Herstellung eines Referenzelektrolyten

Ein für die nachfolgend beschriebenen Beispiele verwendeter Referenzelektrolyt wurde nach dem in der Patentschrift EP 2 954 588 B1 beschriebenen Verfahren hergestellt (im Nachfolgenden bezeichnet als [V6]). Zunächst wurde Lithiumchlorid (LiCl) unter Vakuum bei 120 °C für drei Tage getrocknet. Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt bis das gewünschte molare Verhältnis von $SO_2$ zu $LiAlCl_4$ gebildet wurde. Der so gebildete Referenzelektrolyt hatte die Zusammensetzung $LiAlCl_4$ * x $SO_2$, wobei x abhängig von der zugeführten Menge an $SO_2$ ist.

Beispiel 2: Herstellung von vier Ausführungsbeispielen 1, 2, 3 und 4 eines auf $SO_2$-basierenden Elektrolyten für eine Batteriezelle

Für die nachfolgend beschriebenen Experimente wurden vier Ausführungsbeispiele 1, 2, 3 und 4 des auf $SO_2$-basierenden Elektrolyten hergestellt (nachfolgend bezeichnet als Elektrolyte 1, 2, 3 und 4). Hierfür wurden zunächst vier unterschiedliche erste Leitsalze nach Formel (I) gemäß einem in den folgenden Dokumenten [V7], [V8] und [V9] beschriebenen Herstellungsverfahren hergestellt:

[V7] "I. Krossing, Chem. Eur. J. 2001, 7, 490;
[V8] S. M. Ivanova et al., Chem. Eur. J. 2001, 7, 503;
[V9] Tsujioka et al., J. Electrochem. Soc., 2004, 151, A1418"

Diese vier unterschiedlichen, ersten Leitsalze nach Formel (I) werden nachfolgend als Verbindungen 1, 2, 3 und 4 bezeichnet. Sie stammen aus der Familie der Polyfluoroalkoxyaluminate und wurden gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurden die nachfolgend darstellten Verbindungen 1, 2 3 und 4 mit den Summen- bzw. Strukturformeln gebildet:

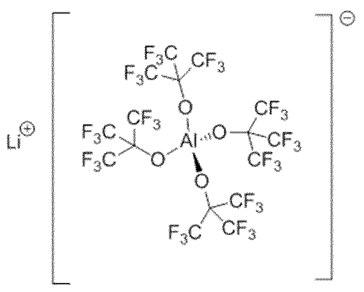

Li $[Al(OC(CF_3)_3)_4]$

Verbindung 1

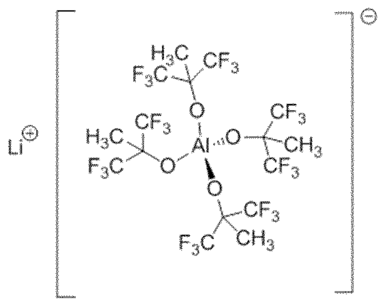

Li $[Al(OC(CH_3)(CF_3)_2)_4]$

Verbindung 2

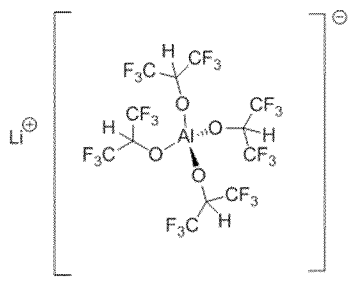

Li $[Al(OCH(CF_3)_2)_4]$

Verbindung 3

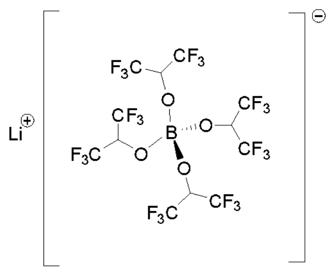

$Li[B(OCH(CF_3)_2)_4]$

Verbindung 4

Zur Aufreinigung wurden die Verbindungen 1, 2, 3 und 4 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3 und 4 in $SO_2$. Hierbei wurde herausgefunden, dass sich die Verbindungen 1, 2, 3 und 4 in $SO_2$ gut lösen.

Die Herstellung der Elektrolyte 1, 2, 3 und 4 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3 und 4 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3 und 4 in den Elektrolyten 1, 2, 3 und 4 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3 und 4 und dem Referenzelektrolyten wurden die nachfolgend beschriebenen Experimente durchgeführt.

<u>Beispiel 3</u>: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material (im jeweiligen Experiment benannt), einen Leitfähigkeitsvermittler und ein Bindemittel auf.
Die untersuchten negativen Elektroden enthielten ein aktives Material, welches in der jeweiligen Experimentbeschreibung benannt wird. Die negativen Elektroden können zusätzlich ein Bindemittel und/ oder ein Leitfähigkeitsadditiv enthalten. Das Ableitelement der positiven und der negativen Elektrode bestand aus Nickel. Tabellen 3a und 3b zeigen, welche aktiven Materialien für die negativen Elektroden untersucht wurden.

Tabelle 3a: Untersuchte Graphite als aktive Materialien der negativen Elektrode

| Bezeichnung | Art | mittlere Korngröße D50 [μm] | spez. Oberfläche [$m^2$/g] |
|---|---|---|---|
| Graphit 1 | synthetischer Graphit | 22,4 | 3,7 |
| Graphit 2 | synthetischer Graphit | 20,2 | 1,8 |
| Graphit 3 | synthetischer Graphit | 17,0 | 1,8 |
| Graphit 4 | synthetischer Graphit | 22,1 | 5,4 |

Tabelle 3b: Untersuchte Slizium-haltige Mischungen als aktive Materialien der negativen Elektrode

| Bezeichnung | Art |
|---|---|
| SiOx 5,0%/ Graphit 3 | Mischung aus SiOx (5 Gew%) und Graphit 3 (95 Gew%) |
| SiOx 17,3%/ Graphit 3 | Mischung aus SiOx (17,3 Gew%)/Graphit 3 (82,7 Gew%) |
| SiOx 24%/ Graphit 3 | Mischung aus SiOx (24 Gew%)/Graphit 3 (76 Gew%) |
| Nano-Si 5,0%/ Graphit 3 | Mischung aus Nano-Silizium (5 Gew%) und Graphit 3 (95 Gew% Si) |
| Nano-Si 2,5%/ Graphit 1 | Mischung aus Nano-Silizium (2,5 Gew%) und Graphit 1 (97.5 Gew%) |
| Nano-Si 5,0%/ Graphit 1 | Mischung aus Nano-Silizium (5 Gew%) und Graphit 1 (95 Gew%) |
| Nano-Si 10%/ Graphit 1 | Mischung aus Nano-Silizium (10 Gew%) und Graphit 1 (90 Gew%) |

Die Test-Vollzellen wurden jeweils mit dem für die Experimente benötigten Elektrolyten, d. h. entweder mit dem Referenzelektrolyten oder den Elektrolyten 1, 2, 3 oder 4 befüllt.

Für jedes Experiment wurden mehrere, d.h. zwei bis vier identische Test-Vollzellen hergestellt. Die in den Experimenten vorgestellten Ergebnisse sind jeweils Mittelwerte aus den für die identischen Test- Test-Vollzellen erhaltenen Messwerte.

Beispiel 4: Messung in Test-Vollzellen

Deckschichtkapazität:

Die im ersten Zyklus verbrauchte Kapazität für die Bildung einer Deckschicht auf der negativen Elektrode ist ein wichtiges Kriterium für die Qualität einer Batteriezelle. Diese Deckschicht wird beim ersten Laden der Test-Vollzelle auf der negativen Elektrode gebildet. Für diese Deckschichtbildung werden Lithiumionen irreversibel verbraucht (Deckschichtkapazität), sodass der Test-Vollzelle weniger zykelbare Kapazität für die Folgezyklen zur Verfügung steht. Die Deckschichtkapazität in % der Theorie, die zur Bildung der Deckschicht auf der negativen Elektrode verbraucht wurde, berechnet sich gemäß nachfolgend genannter Formel:

$$\text{Deckschichtkapazität [in \% der Theorie]} = (Q_{lad}\ (x\ mAh) - Q_{ent}\ (y\ mAh))\ /\ Q_{NEL}$$

$Q_{lad}$ beschreibt die im jeweiligen Experiment vorgegebene Ladungsmenge in mAh; $Q_{ent}$ beschreibt diejenige Ladungsmenge in mAh, die beim anschließenden Entladen der Test-Vollzelle erhalten wurde. Bei $Q_{NEL}$ handelt es sich um die theoretische Kapazität der verwendeten negativen Elektrode. Die theoretische Kapazität berechnet sich z.B. im Fall von Graphit auf einen Wert von 372 mAh/g.
Die Nennkapazität wird erhalten, indem von der theoretischen Kapazität der positiven Elektrode die Deckschichtkapazität (=$Q_{lad}$ (x mAh) - $Q_{ent}$ (y mAh)) subtrahiert wird.

Entladekapazität:

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential.

Bei dieser Lademethode spricht man von einer I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Zelle in einer Stunde ge- bzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden, oft normiert auf die maximale Kapazität, die im jeweiligen Versuch erreicht wurde und jeweils in Prozent der Nennkapazität ausgedrückt.

Experiment 1: Test-Vollzellen mit verschiedenen Graphiten als aktives Material der negativen Elektrode

Mit verschiedenen Graphiten als aktive Materialien der negativen Elektrode wurden Experimente in Test-Vollzellen gemäß Beispiel 3 durchgeführt. Es wurde zum einen die Deckschichtkapazitäten (Graphit 1, 2, 3 und 4) und zum anderen die Entladekapazitäten (Graphit 1, 2 und 3) bestimmt. Die Test-Vollzellen wurden mit dem in Beispiel 2 beschriebenen Elektrolyten 1 befüllt.

Die Test-Vollzellen enthielten negative Elektroden mit den in Tabelle 3a beschriebenen synthetischem Graphiten, d.h. mit Graphit 1, Graphit 2, Graphit 3 oder Graphit 4 als aktives Material. Die positiven Elektroden enthielten Lithiumnickelmangancobaltoxid (NMC622) (Graphit 1, 2 und 3) und Lithiumeisenphosphat (Graphit 4) als aktives Material. Figur 6 zeigt das Potenzial in Volt der Test-Vollzellen beim Laden der negativen Elektrode als Funktion der Kapazität, die bezogen ist auf die theoretische Kapazität der negativen Elektrode. Die vier dargestellten Kurven zeigen gemittelte Ergebnisse jeweils mehrerer Experimente mit den vorstehend beschriebenen Test-Vollzellen. Die Kurve der Test-Vollzelle mit Graphit 4 liegt aufgrund des anderen Aktivmaterials der positiven Elektrode bei etwas niedereren Potentialen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Die ermittelten Deckschichtkapazitäten [in % der Theorie der Kapazität der negativen Elektrode] liegen bei 6,58 % für den Graphit 1, bei 4,29 % für den Graphit 2, bei 5,32 % für den Graphit 3 und bei 7,27 % bei Graphit 4. Im Vergleich zu bestehenden Systemen in organischen Elektrolyten sind das hervorragende Werte.

Mit den Test-Vollzellen, die Graphit 1, 2 und 3 enthielten, wurde in weiteren Zyklen die Entladekapazitäten ermittelt. Zur Ermittlung der Entladekapazitäten (siehe Beispiel 4) wurden die Test-Vollzellen mit einer Stromstärke von 100 mA bis zu einem oberen Potential von 4,4 Volt geladen. Das entsprechende obere Potential wurde so lange gehalten, bis der Ladestrom auf 40 mA abgesunken war. Danach erfolgte die Entladung mit einer Stromstärke von 100 mA bis zu einem Entladepotential von 2,5 Volt.

Figur 7 zeigt Mittelwerte für die Entladekapazitäten normiert auf 100% der Startkapazität der drei Test-Vollzellen als Funktion der Zykelzahl. Diese Mittelwerte der Entladekapazitäten werden jeweils in Prozent der Nennkapazität ausgedrückt. Die Test-Vollzellen mit verschiedenen Graphiten zeigen ein sehr stabiles Verhalten der Entladekapazitäten über die Zykelzahl. In den Test-Vollzellen mit Graphit 1 und Graphit 3 werden in Zyklus 250 noch 96% der Entladekapazität erreicht. Die Test-Vollzelle mit Graphit 2 erreicht noch 93%.

Experiment 2: Graphit 1 als aktives Material der negativen Elektrode in Test-Vollzellen mit Elektrolyt 1 und im Vergleich in Test-Vollzellen mit Referenzelektrolyt

Mit Graphit 1 als Anodenmaterial wurden Experimente in zwei Test-Vollzellen gemäß Beispiel 3 durchgeführt. Die eine Test-Vollzelle wurden mit dem in Beispiel 2 beschriebenen Elektrolyten 1 befüllt, die andere Test-Vollzelle enthielt einen Referenzelektrolyten der Zusammensetzung $LiAlCl_4x6SO_2$. Die positiven Elektroden enthielten Lithiumnickelmangancobaltoxid (NMC622) als aktives Material.

Es wurde zum einen die Deckschichtkapazitäten und zum anderen die Entladekapazitäten bestimmt. Figur 8 zeigt das Potenzial in Volt der Test-Vollzellen beim Laden der negativen Elektrode als Funktion der Kapazität, die bezogen ist auf die theoretische Kapazität der negativen Elektrode. Die zwei dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).
Die ermittelten Deckschichtkapazitäten [in % der Theorie der Kapazität der negativen Elektrode] liegen bei 6,58 % für den Graphit 1 in der Test-Vollzelle mit dem Elektrolyten 1 und bei 8,30 % für den Graphit 1 in der Testvollzelle mit dem Referenzelektrolyten. Der Vorteil des Elektrolyten 1 in Kombination mit Graphit 1 zeigt sich in einer deutlich verringerten Deckschichtkapazität.

Mit den gleichen Test-Vollzellen wurde in weiteren Zyklen die Entladekapazitäten ermittelt. Zur Ermittlung der Entladekapazitäten (siehe Beispiel 4) wurden die Test-Vollzellen mit einer Stromstärke von 100 mA bis zu einem oberen Potential von 4,4 Volt geladen. Das entsprechende obere Potential wurde so lange gehalten, bis der Ladestrom auf 40 mA abgesunken war. Danach erfolgte die Entladung mit einer Stromstärke von 100 mA bis zu einem Entladepotential von 2,5 Volt.
Figur 9 zeigt Mittelwerte für die Entladekapazitäten normiert auf 100% der Startkapazität der zwei Test-Vollzellen als Funktion der Zykelzahl. Diese Mittelwerte der Entladekapazitäten werden jeweils in Prozent der Nennkapazität ausgedrückt.
Die Test-Vollzellen mit den verschiedenen Elektrolyten zeigen ein unterschiedliches Verhalten der Entladekapazitäten über die Zykelzahl. In den Test-Vollzellen mit Graphit 1 in Elektrolyt 1 werden in Zyklus 280 noch 98,4% der Entladekapazität bei einem fast waagrechten Verlauf erreicht. Die Test-Vollzelle mit Graphit 1 in Referenzelektrolyt erreicht noch 96,8% bei leicht weiter fallender Tendenz.

<u>Experiment 3</u>: Deckschichtbildung auf Graphit 2, Graphit 3 und Graphit 4 in Halbzellen mit Referenzelektrolyt

Für Vorversuche zur Untersuchung der Deckschichtkapazität wurden bei Raumtemperatur sowohl mit negativen Elektroden, die Graphit 2 und Graphit 3 als aktives Material enthielten, als auch mit einer negativen Elektrode, welche Graphit 4 als aktives Material enthielt, Halbzellenexperimente durchgeführt. Die Halbzellen wurden mit einem Referenzelektrolyt der Zusammensetzung $LiAlCl_4$ x 1,5 $SO_2$ befüllt und wiesen eine Lithium-Elektrode als Bezugselektrode auf. Derartige elektrochemische Halbzellenexperimente sind aufgrund ihres einfachen Aufbaus und dem damit verbundenen geringen experimentellen Aufwand Standardexperimente zum Testen der Leistungsdaten von Elektroden.

Die Halbzellen wurden mehrmals mit einer Stromstärke von 10 mA (entsprechend 1C auf die praktische Kapazität) geladen und entladen. Aus dem Kapazitätsverlust der ersten drei Zyklen wurde die Deckschichtkapazität berechnet.
Figur 10 zeigt die Deckschichtkurven und die dazugehörigen Deckschichtkapazitäten der beiden Halbzellenexperimente. Die Deckschichtkapazität im Referenzelektrolyten beträgt bei der Halbzelle mit Graphit 2 12,1%, bei Graphit 3 10,3 % und bei Graphit 4 15,5 % der theoretischen Kapazität der negativen Elektrode. Diese Werte sind deutlich höher als die in Experiment 1 bestimmten Daten für die gleichen Graphite in dem Elektrolyt 1.

<u>Experiment 4</u>: Graphit 1 als aktives Material der negativen Elektrode in Test-Vollzellen mit Elektrolyt 1, Elektrolyt 3 und Elektrolyt 4

Zur Untersuchung der Elektrolyte 1, 3 und 4 in Kombination mit Graphit 1 als aktives Material der negativen Elektrode wurden verschiedene Experimente durchgeführt. Zum einen wurden die Deckschichtkapazitäten der Elektrolyte 3 und 4 ermittelt und zum anderen Entladekapazitäten in allen drei Elektrolyten 1, 3 und 4 bestimmt.

Zur Ermittlung der Deckschichtkapazität wurden zwei Test-Vollzellen mit den in Beispiel 2 beschriebenen Elektrolyten 3 und 4 befüllt. Die zwei Test-Vollzellen enthielten Graphit 1 als aktives Material der negativen Elektrode. Die positiven Elektroden hatten Lithiumnickelmangancobaltoxid (NMC622) als aktives Material.
Figur 11 zeigt das Potential in Volt der Test-Vollzellen beim Laden der negativen Elektrode als Funktion der Kapazität, die bezogen ist auf die theoretische Kapazität der negativen Elektrode. Die zwei dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).
Die ermittelten Deckschichtkapazitäten [in % der Theorie der Kapazität der negativen Elektrode] liegen bei 17,77 % im Elektrolyten 3 und bei 20,02 % im Elektrolyten 4. Auch mit den etwas höheren Werten der Deckschichtkapazität in den Elektrolyten 3 und 4 ist ein sehr guter Betrieb einer Batteriezelle mit diesen Elektrolyten möglich.

Für die Entladeexperimente wurden drei Test-Vollzellen gemäß Beispiel 3 mit den in Beispiel 2 beschriebenen Elektrolyten 1, 3 und 4 befüllt. Die Test-Vollzellen hatten Lithiumnickelmangancobaltoxid (NMC) als aktives Material der positiven Elektrode und Graphit 1 als aktives Material der negativen Elektrode. Zur Ermittlung der Entladekapazitäten (siehe Beispiel 4) wurden die Test-Vollzellen mit einer Stromstärke von 15 mA bis zu einer Kapazität von 125 mAh geladen. Danach erfolgte die Entladung mit einer Stromstärke von 15 mA bis zu einem Entladepotential von 2,5 Volt. Figur 12 zeigt den Potentialverlauf während der Entladung über der entladenen Ladungsmenge in % [% der maximalen Ladung (Entladung)]. Alle Test-Vollzellen zeigen eine flache Entladekurve, die für einen guten Betrieb einer Batteriezelle notwendig ist.

Experiment 5: Test-Vollzellen mit Mischungen von $SiO_x$ 5,0%/ Graphit 3, $SiO_x$ 17,3%/ Graphit 3 und $SiO_x$ 24,0%/ Graphit 3 als aktive Materialien der negativen Elektrode

Wie Tabelle 3b zu entnehmen ist, bezeichnet der Begriff $SiO_x$ 5%/ Graphit 3 Mischungen aus $SiO_x$ (5 Gew%) und Graphit 3 (95 Gew%), wobei $SiO_x$ aus einem Gemisch der Bestandteile Si, SiO und $SiO_2$ besteht. Die weiteren beschriebenen $SiO_x$/ Graphit 3 Mischungen besitzen einen $SiO_x$-Anteil von 17,3 Gew% $SiO_x$ bzw. 24,0 Gew% $SiO_x$ und die entsprechenden Mengen an Graphit 3.

Die drei unterschiedlichen Mischungen wurden in drei Test-Vollzellen gemäß Beispiel 3 als aktives Material der negativen Elektrode verwendet und es wurden Experimente durchgeführt. Es wurde zum einen die Deckschichtkapazitäten und zum anderen die Entladekapazitäten bestimmt. Die Test-Vollzellen wurden mit dem in Beispiel 2 beschriebenen Elektrolyten 1 befüllt. Die positiven Elektroden enthielten Lithiumnickelmangancobaltoxid als aktives Material.

Figur 13 zeigt das Potenzial in Volt der drei Test-Vollzellen beim Laden der negativen Elektrode als Funktion der Kapazität, die bezogen ist auf die theoretische Kapazität der negativen Elektrode. Die dargestellten Kurven zeigen gemittelte Ergebnisse jeweils mehrerer Experimente mit der vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,8 Volt. Dabei erfolgte die Ermittlung der Entladekapazität ($Q_{ent}$).
Die ermittelte Deckschichtkapazitäten [in % der Theorie der Kapazität der negativen Elektrode] liegen bei 12,69 % für die Mischung $SiO_x$ 5,0%/ Graphit 3, bei 15,29% für die Mischung $SiO_x$ 17,3%/ Graphit 3 und bei 14,41 % für die Mischung $SiO_x$ 24,0%/ Graphit 3.

Mit den gleichen Test-Vollzellen wurden in zehn weiteren Zyklen die Entladekapazität ermittelt. Zur Ermittlung der Entladekapazitäten (siehe Beispiel 4) wurden die Test-Vollzellen mit einer Stromstärke von 40 mA bis zu einem oberen Potential von 4,4 Volt geladen. Danach erfolgte die Entladung mit einer Stromstärke von 40 mA bis zu einem Entladepotential von 2,8 Volt. Figur 14 zeigt Mittelwerte für die Entladekapazitäten für die 10 Zyklen normiert auf 100% der Startkapazität der Test-Vollzellen als Funktion der Zykelzahl. Diese Mittelwerte der Entladekapazität werden jeweils in Prozent der Nennkapazität ausgedrückt. Alle drei Zellen zeigen einen flachen Verlauf der Entladekapazität.

Experiment 6: Test-Vollzellen mit Nano-Silizium/Graphit als aktives Material der negativen Elektrode

Mit den in Tabelle 3b genannten Nano-Silizium/Graphit-Mischungen als aktive Materialien der negativen Elektrode wurden Experimente in Test-Vollzellen gemäß Beispiel 3 durchgeführt. Es wurde zum einen die Deckschichtkapazitäten und zum anderen die Entladekapazitäten bestimmt. Die Test-Vollzellen wurden mit dem in Beispiel 2 beschriebenen Elektrolyten 1 befüllt.

Die vier Test-Vollzellen umfassten negative Elektroden mit entweder einem Gemisch aus Nano-Silizium (5 wt%) und Graphit 3 (95 wt%) oder einem Gemisch aus Nanosilizium (2,5 wt%) und Graphit 1 (97,5 wt%) oder einem Gemisch aus Nano-Silizium (5,0 wt%) und Graphit 1 (95,0 wt%) oder einem Gemisch aus Nano-Silizium (10 wt%) und Graphit 1 (90 wt%). Die positiven Elektroden enthielten Lithiumnickelmangancobaltoxid als aktives Material.
Figur 15 zeigt das Potenzial in Volt der Test-Vollzellen beim Laden der negativen Elektrode gegen Lithium als Funktion der Kapazität, die bezogen ist auf die theoretische Kapazität der negativen Elektrode. Die vier dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,8 Volt. Dabei erfolgte die Ermittlung der Entladekapazität ($Q_{ent}$).
Die ermittelten Deckschichtkapazitäten [in % der Theorie der Kapazität der negativen Elektrode] liegen bei 12,47 % für das Gemisch aus Nano-Silizium (5 wt%) und Graphit 3 (95 wt%), bei 9,91 % für das Gemisch aus Nano-Silizium (2,5 wt%) und Graphit 1 (97,5 wt%), bei 11,63 % für das Gemisch aus Nano-Silizium (5,0 wt%) und Graphit 1 (95,0 wt%) und bei 14,77% für das Gemisch aus Nano-Silizium (10 wt%) und Graphit 1 (90 wt%).

Mit den gleichen Test-Vollzellen wurde in weiteren zehn Zyklen die Entladekapazitäten ermittelt. Zur Ermittlung der Entladekapazitäten (siehe Beispiel 4) wurden die Test-Vollzellen mit einer Stromstärke von 40 mA bis zu einem

oberen Potential von 4,4 Volt geladen. Danach erfolgte die Entladung mit einer Stromstärke von 40 mA bis zu einem Entladepotential von 2,8 Volt. Figur 16 zeigt Mittelwerte für die Entladekapazitäten für die 10 Zyklen der drei Test-Vollzellen als Funktion der Zykelzahl. Diese Mittelwerte der Entladekapazitäten werden jeweils in Prozent der Nennkapazität ausgedrückt. Alle vier Zellen zeigen einen flachen Verlauf der Entladekapazität.

Experiment 7: Bestimmung von Leitfähigkeiten der Elektrolyte 1, 3 und 4

Zur Bestimmung der Leitfähigkeit wurde der Elektrolyte 1, 3 und 4 mit verschiedenen Konzentrationen der Verbindungen 1, 3 und 4 hergestellt. Für jede Konzentration der verschiedenen Verbindungen wurden die Leitfähigkeiten der Elektrolyten bestimmt, indem ein konduktives Messverfahren verwendet wurde. Dabei wurde nach Temperierung ein Zweielektrodensensor berührend in die Lösung gehalten und in einem Messbereich von 0 - 50 mS/cm gemessen. Bei den Messungen wurde beachtet, dass der Sensor mit der $SO_2$-haltigen Elektrolytlösung reagieren kann.

Figur 17 zeigt die Leitfähigkeit des Elektrolyten 1 in Abhängigkeit der Konzentration der Verbindung 1. Zu sehen ist ein Maximum der Leitfähigkeit bei einer Konzentration der Verbindung 1 von 0,6 mol/L - 0,7 mol/L mit einem Wert von ca. 37,9 mS/cm. Im Vergleich dazu haben die aus dem Stand der Technik bekannten, organischen Elektrolyten, wie z.B. LP30 (1 M LiPF6 / EC-DMC (1:1 Gew.)) eine Leitfähigkeit von nur ca. 10 mS/cm.

Die Figuren 18 (Elektrolyt 3) und 19 (Elektrolyt 4) zeigen die zu der verschiedenen Konzentration ermittelten Leitfähigkeitswerte für die Elektrolyte 3 und 4.

Bei Elektrolyt 4 werden maximal 18 mS/cm bei einer Leitsalzkonzentration von 1 mol/L erreicht. Elektrolyt 3 zeigt seine höchste Leitfähigkeit von 0,5 mS/cm bei einer Leitsalzkonzentration von 0,6 mol/L. Obwohl Elektrolyt 3 eine geringere Leitfähigkeit zeigt, ist, wie in Experiment 4, eine Ladung bzw. Entladung einer Test-Vollzelle gut möglich.

Experiment 8: Tieftemperaturverhalten

Um das Tieftemperaturverhalten des Elektrolyten 1 im Vergleich zum Referenzelektrolyten zu bestimmen, wurden zwei Test-Vollzellen, gemäß Beispiel 3 hergestellt. Eine Test-Vollzelle wurde mit Referenzelektrolyt der Zusammensetzung $LiAlCl_4*6SO_2$ und die andere Test-Vollzelle mit Elektrolyt 1 befüllt. Die Test-Vollzelle mit dem Referenzelektrolyt enthielt Lithiumeisenphosphat (LEP) als aktives Material, die Testzelle mit Elektrolyt 1 enthielt Lithiumnickelmangancobaltoxid (NMC) als aktives Material der positiven Elektrode. Beide Test-Vollzellen enthielten Graphit 1 als aktives Material der negativen Elektrode. Die Test-Vollzellen wurden bei 20°C bis 3,6 Volt (LEP) bzw. 4,4 Volt (NMC) geladen und bei der jeweiligen zu untersuchenden Temperatur bis 2,5 Volt wieder entladen. Die bei 20°C erreichte Entladekapazität wurde mit 100% bewertet. Die Temperatur zur Entladung wurde in Temperaturschritten von 10°K erniedrigt. Die erhaltene Entladekapazität wurde in % der Entladekapazität bei 20°C beschrieben. Da die Tieftemperaturentladungen nahezu unabhängig von den verwendeten aktiven Materialien der positiven und negativen Elektrode sind, können die Ergebnisse auf alle Kombinationen von aktiven Materialien übertragen werden. Tabelle 4 zeigt die Ergebnisse.

Tabelle 4: Entladekapazitäten in Abhängigkeit der Temperatur

| Temperatur | Entladekapazität des Elektrolyts 1 | Entladekapazität des Referenzelektrolyt |
|---|---|---|
| 20°C | 100% | 100% |
| 10°C | 99% | 99% |
| 0°C | 95% | 46% |
| -10°C | 89% | 21% |
| -20°C | 82% | n/a |
| -30°C | 73% | n/a |
| -35°C | 68% | n/a |
| -40°C | 61% | n/a |

Die Test-Vollzelle mit dem Elektrolyt 1 zeigt ein sehr gutes Tieftemperaturverhalten. Bei - 20°C werden noch 82% der Kapazität erreicht, bei - 30°C noch 73%. Selbst bei einer Temperatur von -40 °C können noch 61% der Kapazität entladen werden. Im Gegensatz dazu zeigt die Test-Vollzelle mit dem Referenzelektrolyten nur eine Entladefähigkeit bis - 10°C. Dabei wird eine Kapazität von 21% erreicht. Bei tieferen Temperaturen kann die Zelle mit dem Referenzelektrolyten nicht mehr entladen werden.

## Patentansprüche

**1.** Wiederaufladbare Batteriezelle (2, 20, 40), enthaltend ein aktives Metall, zumindest eine positive Elektrode (4, 23, 44), zumindest eine negative Elektrode (5, 22, 45), ein Gehäuse (1, 28) und einen Elektrolyten, wobei die negative Elektrode ein aktives Material enthält, das ausgewählt ist aus der Gruppe, die gebildet wird von

- einem Insertionsmaterial aus Kohlenstoff,
- einem Legierungsbildenden-Aktivmaterial,
- einem Interkalationsmaterial, welches keinen Kohlenstoff enthält, und
- einem Konversions-Aktivmaterial,

und wobei der Elektrolyt auf $SO_2$ basiert und zumindest ein erstes Leitsalz enthält, welches die Formel (I)

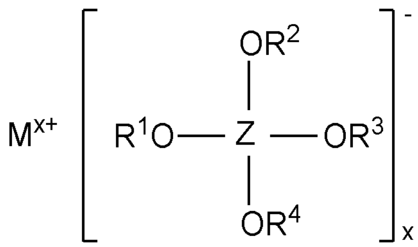

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- wobei Z Aluminium oder Bor ist.

**2.** Wiederaufladbare Batteriezelle (2, 20, 40) nach Anspruch 1, bei welcher das Insertionsmaterial aus Kohlenstoff ausgewählt ist aus der Gruppe, die gebildet wird von

- Graphit,
- Naturgraphit, insbesondere flockenförmiger oder gerundeter Naturgraphit,
- synthetischem Graphit, insbesondere Mesophasen Graphit,
- graphitierten MesoCarbon MicroBeads,
- kohlenstoffbeschichtetem Graphit und
- amorphem Kohlenstoff.

**3.** Wiederaufladbare Batteriezelle (2, 20, 40) nach Anspruch 1, bei welcher das Legierungsbildende-Aktivmaterial ausgewählt ist

- aus der Gruppe, die gebildet wird von Lithium-speichernden Metallen und Metalllegierungen, bevorzugt Si, Ge, Sn, $SnCo_xC_y$ und $SnSi_x$, oder
- aus der Gruppe, die gebildet wird von Oxiden der Lithium-speichernden Metalle und Metalllegierungen, bevorzugt $SnO_x$, $SiO_x$ und oxidische Gläser von Sn, Si.

**4.** Wiederaufladbare Batteriezelle (2, 20, 40) nach Anspruch 1, bei welcher das Legierungsbildende-Aktivmaterial aus Silizium oder aus Siliziumoxiden oder aus Mischungen von Silizium und Siliziumoxiden ausgebildet ist.

**5.** Wiederaufladbare Batteriezelle (2, 20, 40) nach Anspruch 1, bei welcher die negative Elektrode (5, 22, 45) zumindest ein Legierungsbildendes-Anodenaktivmaterial, insbesondere zumindest eine mit Lithium Legierungsbildendes-Anodenaktivmaterial, in Kombination mit zumindest einem

Insertionsmaterial aus Kohlenstoff enthält, bevorzugt sind Kombinationen von Silizium und/oder Siliziumoxiden und Graphit.

6. Wiederaufladbare Batteriezelle (2, 20, 40) nach einem der Ansprüche 1 bis 3, bei welcher das Interkalationsmaterial, welches keinen Kohlenstoff enthält, ein Lithium-Titanat ist, insbesondere $Li_4Ti_5O_{12}$.

7. Wiederaufladbare Batteriezelle (2, 20, 40) nach einem der Ansprüche 1 bis 4, bei welcher das Konversions-Aktivmaterial ausgewählt ist

   - aus der Gruppe, die gebildet wird von Manganoxiden ($MnO_x$), Eisenoxiden ($FeO_x$), Cobaltoxiden ($CoO_x$), Nickeloxiden ($NiO_x$) und Kupferoxiden ($CuO_x$), oder
   - aus der Gruppe, die gebildet von Magnesiumhydrid ($MgH_2$), Titanhydrid ($TiH_2$), Aluminiumhydrid ($AlH_3$) und Bor-, Aluminium- und Magnesium-basierten ternären Hydriden.

8. Wiederaufladbare Batteriezelle (2, 20, 40) nach einem der vorhergehenden Ansprüche, bei welcher die positive Elektrode (4, 23, 44) als aktives Material zumindest eine Verbindung enthält, die vorzugsweise die Zusammensetzung $A_xM'_yM''_zO_a$ aufweist, worin

   - A mindestens ein Metall, das ausgewählt ist aus der Gruppe, die gebildet wird von den Alkalimetallen, den Erdalkalimetallen, den Metallen der Gruppe 12 des Periodensystems oder Aluminium,
   - M' mindestens ein Metall, das ausgewählt ist aus der Gruppe, die gebildet wird von den Elementen Ti, V, Cr, Mn, Fe, Co, Ni, Cu und Zn;
   - M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
   - x und y unabhängig voneinander Zahlen größer 0;
   - z eine Zahl größer oder gleich 0; und
   - a eine Zahl größer 0.

9. Wiederaufladbare Batteriezelle (2, 20, 40) nach Anspruch 8, bei welcher die Verbindung die Zusammensetzung $Li_xM'_yM''_zO_a$ aufweist, in welcher M' Mangan und M" Cobalt sind, und
   wobei x, y und z vorzugsweise gleich 1 und a vorzugsweise gleich 4 ist.

10. Wiederaufladbare Batteriezelle (2, 20, 40) nach Anspruch 8 oder 9, bei welcher die Verbindung die Zusammensetzung $Li_xM'_yM''_zO_a$ aufweist, in welcher M' Nickel und Mangan umfasst und M" Kobalt ist und die die Formel $Li_xNi_{y1}Mn_{y2}Co_zO_a$, aufweist, wobei y1 und y2 unabhängig voneinander Zahlen größer 0 sind.

11. Wiederaufladbare Batteriezelle (2, 20, 40) nach Anspruch 8, bei welcher die Verbindung die Zusammensetzung $Li_xM'_yM''^1_{z1}M''^2_{z2}O_4$ aufweist, wobei $M''^1$ mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ Phosphor ist, z1 eine Zahl größer oder gleich 0 ist und z2 den Wert 1 hat.

12. Wiederaufladbare Batteriezelle (2, 20, 40) nach Anspruch 11,

   bei welcher die Verbindung die Zusammensetzung $Li_xM'_yM''^1_{z1}PO_4$ aufweist, in welcher M' Eisen und $M''^1_{z1}$ Mangan ist,
   wobei die Verbindung bevorzugt die Zusammensetzung $Li(Fe_{0.3}Mn_{0.7})PO_4$ aufweist.

13. Wiederaufladbare Batteriezelle (2, 20, 40) nach einem der vorhergehenden Ansprüche, bei welchem die Substituenten $R^1$, $R^2$, $R^3$ und $R^4$ des ersten Leitsalzes unabhängig voneinander ausgewählt sind aus der Gruppe, die gebildet wird von

   - $C_1$-$C_6$ Alkyl; bevorzugt von $C_2$-$C_4$ Alkyl; besonders bevorzugt von den Alkylgruppen 2-Propyl, Methyl und Ethyl;
   - $C_2$-$C_6$ Alkenyl; bevorzugt von $C_2$-$C_4$ Alkenyl; besonders bevorzugt von den Alkenylgruppen Ethenyl und Propenyl;

- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**14.** Wiederaufladbare Batteriezelle (2, 20, 40) nach einem der vorhergehenden Ansprüche, bei welchem zumindest einer der Substituenten $R^1$, $R^2$, $R^3$ und $R^4$ des ersten Leitsalzes durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl.

**15.** Wiederaufladbare Batteriezelle (2, 20, 40) nach einem der vorhergehenden Ansprüche, bei welchem zumindest einer der Substituenten $R^1$, $R^2$, $R^3$ und $R^4$ des ersten Leitsalzes eine $CF_3$-Gruppe oder eine $OSO_2CF_3$-Gruppe ist.

**16.** Wiederaufladbare Batteriezelle (2, 20, 40) nach einem der vorhergehenden Ansprüche, bei welchem das erste Leitsalz ausgewählt ist aus der Gruppe, die gebildet wird von

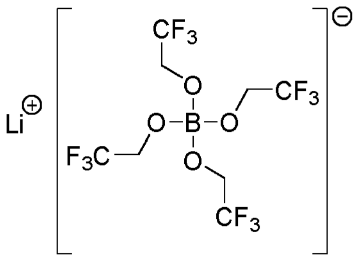

$Li[B(OCH_2CF_3)_4]$

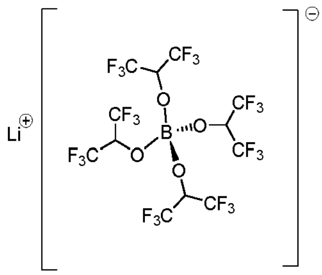

$Li[B(OCH(CF_3)_2)_4]$

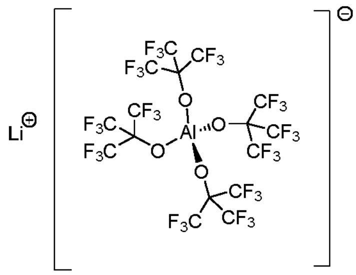

$Li[Al(OC(CF_3)_3)_4]$

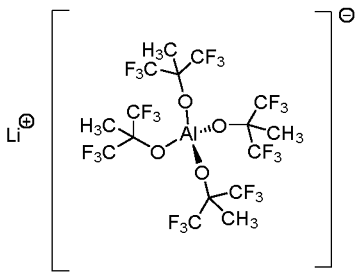

$Li[Al(OC(CH_3)(CF_3)_2)_4]$

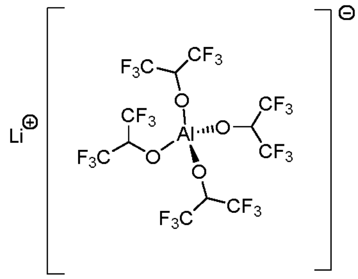

$Li[Al(OCH(CF_3)_2)_4]$.

**17.** Wiederaufladbare Batteriezelle (2, 20, 40) nach einem der vorhergehenden Ansprüche, wobei der Elektrolyt mindestens ein zweites, von dem ersten Leitsalz nach Formel (I) abweichendes Leitsalz enthält.

**18.** Wiederaufladbare Batteriezelle (2, 20, 40) nach Anspruch 17, bei welcher das zweite Leitsalz des Elektrolyten eine Alkalimetallverbindung, insbesondere eine Lithiumverbindung ist, die ausgewählt ist aus der Gruppe, die gebildet wird von einem Aluminat, einem Halogenid, einem Oxalat, einem Borat, einem Phosphat, einem Arsenat und einem Gallat.

**19.** Wiederaufladbare Batteriezelle (2, 20, 40) nach Anspruch 17 oder 18, bei welcher das zweite Leitsalz des Elektrolyten ein Lithiumtetrahalogenoaluminat, insbesondere Lithiumtetrachloroaluminat ist.

**20.** Wiederaufladbare Batteriezelle (2, 20, 40) nach einem der vorhergehenden Ansprüche, bei welcher der Elektrolyt mindestens ein Additiv enthält.

**21.** Wiederaufladbare Batteriezelle (2, 20, 40) nach Anspruch 20, bei welcher das Additiv des Elektrolyten ausgewählt ist aus der Gruppe, die gebildet wird von Vinylencarbonat und

seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

**22.** Wiederaufladbare Batteriezelle (2, 20, 40) nach einem der vorhergehenden Ansprüche,
bei welcher der Elektrolyt die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**23.** Wiederaufladbare Batteriezelle (2, 20, 40) nach einem der vorhergehenden Ansprüche,
bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**24.** Wiederaufladbare Batteriezelle (2, 20, 40) nach einem der vorhergehenden Ansprüche,
bei welcher der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**25.** Wiederaufladbare Batteriezelle (2, 20, 40) nach einem der vorhergehenden Ansprüche,
bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**26.** Wiederaufladbare Batteriezelle (2, 20, 40) nach einem der vorhergehenden Ansprüche,
bei welcher die positive Elektrode (4, 23, 44) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Kobalt, Nickel, Mangan oder Eisen ist.

**27.** Wiederaufladbare Batteriezelle (2, 20, 40) nach einem der vorhergehenden Ansprüche,
bei welcher die positive Elektrode (4, 23, 44) zumindest eine Metallverbindung enthält, die die chemische Struktur eines Spinells, eines Schichtoxids, einer Umwandlungsverbindung oder einer Polyanionischen Verbindung hat.

**28.** Wiederaufladbare Batteriezelle (2, 20, 40) nach einem der vorhergehenden Ansprüche,
bei welcher die positive Elektrode (4, 23, 44) und/oder die negative Elektrode (5, 22, 45) ein Ableitelement (26, 27) aufweisen, das vorzugsweise

- entweder planar in Form eines Metallblechs oder einer Metallfolie oder
- dreidimensional in Form einer porösen Metallstruktur, insbesondere in Form eines Metallschaums (18)

ausgebildet ist.

**29.** Wiederaufladbare Batteriezelle (2, 20, 40) nach einem der vorhergehenden Ansprüche, bei welcher die positive Elektrode (4, 23, 44) und/oder die negative Elektrode (5, 22, 45) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder

ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vorliegt.

**30.** Wiederaufladbare Batteriezelle (2, 20, 40) nach einem der vorhergehenden Ansprüche, welche mehrere negativen Elektroden (5, 22, 45) und mehrere positive Elektroden (4, 23, 44) umfasst, die alternierend gestapelt in dem Gehäuse (1, 28) angeordnet sind, wobei die positiven Elektroden (4, 23, 44) und die negativen Elektroden (5, 22, 45) vorzugsweise jeweils durch Separatoren (11) voneinander elektrisch getrennt sind.

## Claims

**1.** Rechargeable battery cell (2, 20, 40), containing an active metal, at least one positive electrode (4, 23, 44), at least one negative electrode (5, 22, 45), a housing (1, 28) and an electrolyte,
wherein the negative electrode contains an active material selected from the group formed by

- an insertion material made of carbon,
- an alloy-forming active material,
- an intercalation material which contains no carbon, and
- a conversion active material,

and wherein the electrolyte is based on $SO_2$ and contains at least one first conducting salt having the formula (I)

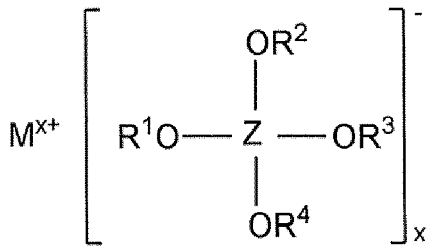

formula (I),

wherein

- M is a metal selected from the group formed by alkali metals, alkaline earth metals, metals of group 12 of the periodic table of the elements and aluminium;
- x is an integer from 1 to 3;
- the substituents $R^1$, $R^2$, $R^3$ and $R^4$ are selected independently of one another from the group formed by $C_1$-$C_{10}$alkyl, $C_2$-$C_{10}$alkenyl, $C_2$-$C_{10}$alkynyl, $C_3$-$C_{10}$cycloalkyl, $C_6$-$C_{14}$aryl and $C_5$-$C_{14}$heteroaryl; and
- wherein Z is aluminium or boron.

**2.** Rechargeable battery cell (2, 20, 40) according to claim 1,

wherein the insertion material made of carbon is selected from the group formed by

- graphite,
- natural graphite, especially flake-form or rounded natural graphite,
- synthetic graphite, especially mesophase graphite,
- graphited mesocarbon microbeads,
- carbon-coated graphite and
- amorphous carbon.

**3.** Rechargeable battery cell (2, 20, 40) according to claim 1, wherein the alloy-forming active material is selected

- from the group formed by lithium-storing metals and metal alloys, preferably Si, Ge, Sn, $SnCo_xC_y$ and $SnSi_x$, or
- from the group formed by oxides of the lithium-storing metals and metal alloys, preferably $SnO_x$, $SiO_x$ and oxidic glasses of Sn, Si.

**4.** Rechargeable battery cell (2, 20, 40) according to claim 1, wherein the alloy-forming active material is made from silicon or from silicon oxides or from mixtures of silicon and silicon oxides.

**5.** Rechargeable battery cell (2, 20, 40) according to claim 1, wherein the negative electrode (5, 22, 45) contains at least one alloy-forming anode active material, especially at least one anode active material forming an alloy with lithium, in combination with at least one insertion material made of carbon, preference being given to combinations of silicon and/or silicon oxides and graphite.

**6.** Rechargeable battery cell (2, 20, 40) according to any one of claims 1 to 3, wherein the intercalation material which contains no carbon is a lithium titanate, especially $Li_4Ti_5O_{12}$.

**7.** Rechargeable battery cell (2, 20, 40) according to any one of claims 1 to 4, wherein the conversion active material is selected

- from the group formed by manganese oxides ($MnO_x$), iron oxides ($FeO_x$), cobalt oxides ($CoO_x$), nickel oxides ($NiO_x$) and copper oxides ($CuO_x$), or
- from the group formed by magnesium hydride ($MgH_2$), titanium hydride ($TiH_2$), aluminium hydride ($AlH_3$) and boron-, aluminium- and magnesium-based ternary hydrides.

**8.** Rechargeable battery cell (2, 20, 40) according to any one of the preceding claims, wherein the positive electrode (4, 23, 44) contains as active material at least one compound which preferably has the composition $A_xM'_yM''_zO_a$ in which

- A is at least one metal selected from the group formed by the alkali metals, the alkaline earth metals, the metals of group 12 of the periodic table or aluminium;
- M' is at least one metal selected from the group formed by the elements Ti, V, Cr, Mn, Fe, Co, Ni, Cu and Zn;
- M" is at least one element selected from the group formed by the elements of groups 2, 3, 4, 5, 6, 7, 8, 9, 10, 11, 12, 13, 14, 15 and 16 of the periodic table of the elements;
- x and y independently of one another are numbers greater than 0;
- z is a number greater than or equal to 0; and
- a is a number greater than 0.

**9.** Rechargeable battery cell (2, 20, 40) according to claim 8,

wherein the compound has the composition $Li_xM'_yM''_zO_a$, in which M' is manganese and M" is cobalt, and wherein x, y and z are preferably equal to 1 and a is preferably equal to 4.

**10.** Rechargeable battery cell (2, 20, 40) according to claim 8 or 9, wherein the compound has the composition $Li_xM'_yM''_zO_a$, in which M' comprises nickel and manganese and M" is cobalt and which has the formula $Li_xNi_{y1}Mn_{y2}Co_zO_a$, wherein y1 and y2 independently of one another are numbers greater than 0.

**11.** Rechargeable battery cell (2, 20, 40) according to claim 8, wherein the compound has the composition $Li_xM'_yM''^1_{z1}M''^2_{z2}O_4$, wherein $M''^1$ is at least one element selected from the group formed by the elements of groups 2, 3, 4, 5, 6, 7, 8, 9, 10, 11, 12, 13, 14, 15 and 16 of the periodic table of the elements, $M''^2$ is phosphorus, z1 is a number greater than or equal to 0 and z2 has the value 1.

**12.** Rechargeable battery cell (2, 20, 40) according to claim 11, wherein the compound has the composition $Li_xM'_yM''^1_{z1}PO_4$, in which M' is iron and $M''^1_{z1}$ is manganese, the compound preferably having the composition $Li(Fe_{0.3}Mn_{0.7})PO_4$.

**13.** Rechargeable battery cell (2, 20, 40) according to any one of the preceding claims, wherein the substituents $R^1$, $R^2$, $R^3$ and $R^4$ of the first conducting salt are selected independently of one another from the group formed by

- $C_1$-$C_6$alkyl, preferably $C_2$-$C_4$alkyl; especially preferably the alkyl groups 2-propyl, methyl and ethyl;
- $C_2$-$C_6$alkenyl; preferably $C_2$-$C_4$alkenyl; especially preferably the alkenyl groups ethenyl and propenyl;
- $C_2$-$C_6$alkynyl; preferably $C_2$-$C_4$alkynyl;
- $C_3$-$C_6$cycloalkyl;
- phenyl; and
- $C_5$-$C_7$heteroaryl.

**14.** Rechargeable battery cell (2, 20, 40) according to any one of the preceding claims, wherein at least one of the substituents $R^1$, $R^2$, $R^3$ and $R^4$ of the first conducting salt is substituted by at least one fluorine atom and/or by at least one chemical group, the chemical group being selected from the group formed by $C_1$-$C_4$alkyl, $C_2$-$C_4$alkenyl, $C_2$-$C_4$alkynyl, phenyl and benzyl.

**15.** Rechargeable battery cell (2, 20, 40) according to any one of the preceding claims, wherein at least one of the substituents $R^1$, $R^2$, $R^3$ and $R^4$ of the first conducting salt is a $CF_3$ group or a $OSO_2CF_3$ group.

**16.** Rechargeable battery cell (2, 20, 40) according to any one of the preceding claims, wherein the first conducting salt is selected from the group formed by

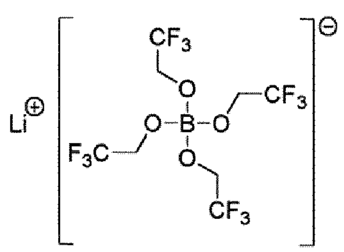

$Li[B(OCH_2CF_3)_4]$

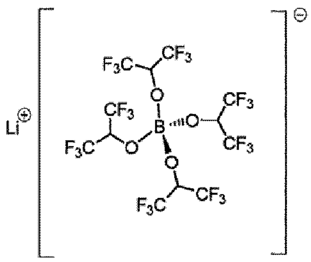

$Li[B(OCH(CF_3)_2)_4]$

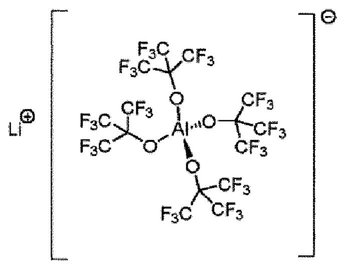

$Li[Al(OC(CF_3)_3)_4]$

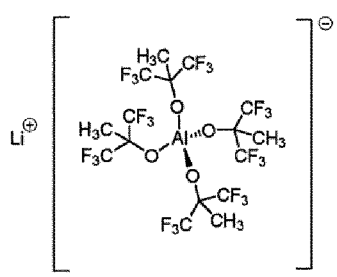

$Li[Al(OC(CH_3)(CF_3)_2)_4]$

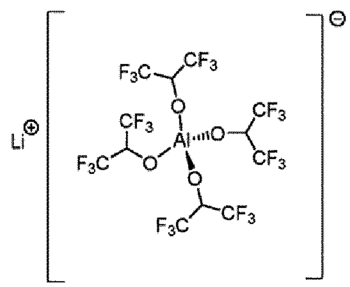

$Li[Al(OCH(CF_3)_2)_4]$.

**17.** Rechargeable battery cell (2, 20, 40) according to any one of the preceding claims, wherein the electrolyte contains at least one second conducting salt different from the first conducting salt according

to formula (I).

**18.** Rechargeable battery cell (2, 20, 40) according claim 17,
wherein the second conducting salt of the electrolyte is an alkali metal compound, especially a lithium compound, selected from the group formed by an aluminate, a halide, an oxalate, a borate, a phosphate, an arsenate and a gallate.

**19.** Rechargeable battery cell (2, 20, 40) according to claim 17 or 18,
wherein the second conducting salt of the electrolyte is a lithium tetrahaloaluminate, especially lithium tetrachloroaluminate.

**20.** Rechargeable battery cell (2, 20, 40) according to any one of the preceding claims,
wherein the electrolyte contains at least one additive.

**21.** Rechargeable battery cell (2, 20, 40) according to claim 20,
wherein the additive of the electrolyte is selected from the group formed by vinylene carbonate and its derivatives, vinyl ethylene carbonate and its derivatives, methyl ethylene carbonate and its derivatives, lithium (bisoxalato)borate, lithium difluoro(oxalato)borate, lithium tetrafluoro(oxalato)phosphate, lithium oxalate, 2-vinylpyridine, 4-vinylpyridine, cyclic exomethylene carbonates, sultones, cyclic and acyclic sulfonates, acyclic sulfites, cyclic and acyclic sulfites, organic esters of inorganic acids, acyclic and cyclic alkanes, which acyclic and cyclic alkanes have a boiling point at 1 bar of at least 36°C, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides and halogenated organic heterocycles.

**22.** Rechargeable battery cell (2, 20, 40) according to any one of the preceding claims,
wherein the electrolyte has the composition

(i) 5 to 99.4 % by weight sulfur dioxide,
(ii) 0.6 to 95 % by weight of the first conducting salt,
(iii) 0 to 25 % by weight of the second conducting salt and
(iv) 0 to 10 % by weight of the additive,

based on the total weight of the electrolyte composition.

**23.** Rechargeable battery cell (2, 20, 40) according to any one of the preceding claims,
wherein the molar concentration of the first conducting salt is in the range of from 0.01 mol/l to 10 mol/l, preferably from 0.05 mol/l to 10 mol/l, more preferably from 0.1 mol/l to 6 mol/l and especially preferably from 0.2 mol/l to 3.5 mol/l, based on the total volume of the electrolyte.

**24.** Rechargeable battery cell (2, 20, 40) according to any one of the preceding claims,
wherein the electrolyte contains at least 0.1 mol $SO_2$, preferably at least 1 mol $SO_2$, more preferably at least 5 mol $SO_2$, more preferably at least 10 mol $SO_2$ and especially preferably at least 20 mol $SO_2$ per mol of conducting salt.

**25.** Rechargeable battery cell (2, 20, 40) according to any one of the preceding claims,
wherein the active metal is

- an alkali metal, especially lithium or sodium;
- an alkaline earth metal, especially calcium;
- a metal of group 12 of the periodic table, especially zinc; or
- aluminium.

**26.** Rechargeable battery cell (2, 20, 40) according to any one of the preceding claims,
wherein the positive electrode (4, 23, 44) contains at least one metal compound selected from the group formed by a metal oxide, a metal halide and a metal phosphate, wherein the metal of the metal compound is preferably a transition metal of atomic numbers 22 to 28 of the periodic table of the elements, especially cobalt, nickel, manganese or iron.

**27.** Rechargeable battery cell (2, 20, 40) according to any one of the preceding claims, wherein the positive electrode (4, 23, 44) contains at least one metal compound which has the chemical structure of a spinel, a layer oxide, a transformation compound or a polyanionic compound.

**28.** Rechargeable battery cell (2, 20, 40) according to any one of the preceding claims, wherein the positive electrode (4, 23, 44) and/or the negative electrode (5, 22, 45) has a current collector (26, 27) which is preferably

- either planar in the form of a metal sheet or a metal foil or
- three-dimensional in the form of a porous metal structure, especially in the form of a metal foam (18).

**29.** Rechargeable battery cell (2, 20, 40) according to any one of the preceding claims,

wherein the positive electrode (4, 23, 44) and/or the negative electrode (5, 22, 45) contains at least one binder, preferably a fluorinated binder, especially a polyvinylidene fluoride and/or a terpolymer of tetrafluoroethylene, hexafluoropropylene and vinylidene fluoride, or
a binder which consists of a polymer composed of monomeric structural units of a conjugated carboxylic acid or of the alkali metal, alkaline earth metal or ammonium salt of such a conjugated carboxylic acid or of a combination thereof, or
a binder which consists of a polymer based on monomeric styrene and butadiene structural units, or a binder from the group of carboxy-methylcelluloses,
wherein the binder is preferably present in a concentration of at most 20 % by weight, more preferably at most 15 % by weight, more preferably at most 10 % by weight, more preferably at most 7 % by weight, more preferably at most 5 % by weight and especially preferably at most 2 % by weight, based on the total weight of the positive electrode.

**30.** Rechargeable battery cell (2, 20, 40) according to any one of the preceding claims, which comprises a plurality of negative electrodes (5, 22, 45) and a plurality of positive electrodes (4, 23, 44) which are arranged stacked alternately in the housing (1, 28), the positive electrodes (4, 23, 44) and the negative electrodes (5, 22, 45) preferably being electrically separated from one another by separators (11).

**Revendications**

**1.** Élément de batterie rechargeable (2, 20, 40), contenant un métal actif, au moins une électrode positive (4, 23, 44), au moins une électrode négative (5, 22, 45), un boîtier (1, 28) et un électrolyte, l'électrode négative contenant un matériau actif qui est choisi dans le groupe formé par

- un matériau d'insertion en carbone,
- un matériau actif formant un alliage,
- un matériau d'intercalation qui ne contient pas de carbone et
- un matériau actif de conversion,

l'électrolyte étant à base de $SO_2$ et contenant au moins un premier sel conducteur qui présente la formule (I)

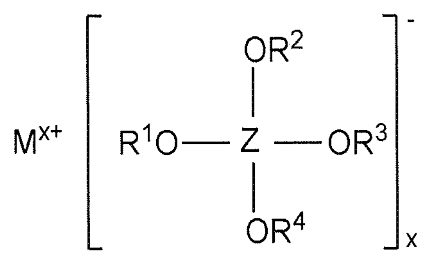

Formule (I)

dans laquelle

- M représente un métal qui est choisi dans le groupe formé par les métaux alcalins, les métaux alcalino-terreux, les métaux du groupe 12 du système périodique des éléments et l'aluminium ;
- x représente un nombre entier de 1 à 3 ;
- les substituants $R^1$, $R^2$, $R^3$ et $R^4$ sont choisis, indépendamment les uns des autres, dans le groupe formé par $C_1$-$C_{10}$-alkyle, $C_2$-$C_{10}$-alcényle, $C_2$-$C_{10}$-alcynyle, $C_3$-$C_{10}$-cycloalkyle, $C_6$-$C_{14}$-aryle et $C_5$-$C_{14}$-hétéroaryle ; et
- Z représentant aluminium ou bore.

**2.** Élément de batterie rechargeable (2, 20, 40) selon la revendication 1, dans lequel le matériau d'insertion en carbone est choisi dans le groupe formé par

- le graphite,
- le graphite naturel, en particulier le graphite naturel en forme de flocons ou arrondi,
- le graphite synthétique, en particulier le graphite en mésophase,
- les microbilles de mésocarbone graphitisées,
- le graphite revêtu de carbone et
- le carbone amorphe.

**3.** Élément de batterie rechargeable (2, 20, 40) selon la revendication 1, dans lequel le matériau actif formant un alliage est choisi

- dans le groupe formé par les métaux et les alliages métalliques stockant le lithium, de préférence Si, Ge, Sn, $SnCo_xC_y$ et $SnSi_x$, ou
- dans le groupe formé par les oxydes des métaux et des alliages métalliques stockant le lithium, de préférence $SnO_x$, $SiO_x$ et les verres oxydes de Sn, Si.

**4.** Élément de batterie rechargeable (2, 20, 40) selon la revendication 1, dans lequel le matériau actif formant un alliage est formé à partir de silicium ou d'oxydes de silicium ou de mélanges de silicium et d'oxydes de silicium.

**5.** Élément de batterie rechargeable (2, 20, 40) selon la revendication 1, dans lequel l'électrode négative (5, 22, 45) contient au moins un matériau actif anodique formant un alliage, en particulier au moins un matériau actif anodique formant un alliage avec du lithium, en combinaison avec au moins un matériau d'insertion en carbone, les combinaisons de silicium et/ou d'oxydes de silicium et de graphite étant préférées.

**6.** Élément de batterie rechargeable (2, 20, 40) selon l'une quelconque des revendications 1 à 3, dans lequel le matériau d'intercalation qui ne contient pas de carbone est un titanate de lithium, en particulier $Li_4Ti_5O_{12}$.

**7.** Élément de batterie rechargeable (2, 20, 40) selon l'une quelconque des revendications 1 à 4, dans lequel le matériau actif de conversion est choisi

- dans le groupe formé par les oxydes de manganèse ($MnO_x$), les oxydes de fer ($FeO_x$), les oxydes de cobalt ($CoO_x$), les oxydes de nickel ($NiO_x$) et les oxydes de cuivre ($CuO_x$) ou
- dans le groupe formé par l'hydrure de magnésium ($MgH_2$), l'hydrure de titane ($TiH_2$), l'hydrure d'aluminium ($AlH_3$) et les hydrures ternaires à base de bore, d'aluminium et de magnésium.

**8.** Élément de batterie rechargeable (2, 20, 40) selon l'une quelconque des revendications précédentes, dans lequel l'électrode positive (4, 23, 44) contient, comme matériau actif, au moins un composé qui présente de préférence la composition $A_xM'_yM''_zO_a$, dans laquelle

- A représente au moins un métal qui est choisi dans le groupe formé par les métaux alcalins, les métaux alcalino-terreux, les métaux du groupe 12 du système périodique des éléments ou l'aluminium ;
- M' représente au moins un métal qui est choisi dans le groupe formé par les éléments Ti, V, Cr, Mn, Fe, Co, Ni, Cu et Zn ;
- M" représente au moins un élément qui est choisi dans le groupe formé par les éléments des groupes 2, 3, 4, 5, 6, 7, 8, 9, 10, 11, 12, 13, 14, 15 et 16 du système périodique des éléments ;
- x et y représentent, indépendamment l'un de l'autre, des nombres supérieurs à 0 ;
- z représente un nombre supérieur ou égal à 0 ; et
- a représente un nombre supérieur à 0.

**9.** Élément de batterie rechargeable (2, 20, 40) selon la revendication 8, dans lequel le composé présente la composition $Li_xM'_yM''_zO_a$, dans laquelle M' représente manganèse et M" représente cobalt et dans laquelle x, y et z valent de préférence 1 et a vaut de préférence 4.

**10.** Élément de batterie rechargeable (2, 20, 40) selon la revendication 8 ou 9, dans lequel le composé présente la composition $Li_xM'_yM''_zO_a$, dans laquelle M' comprend du nickel et du manganèse et M" représente cobalt et présente la formule $Li_xNi_{y1}Mn_{y2}Co_zO_a$, dans laquelle y1 et y2 représentent, indépendamment l'un de l'autre, des nombres supérieurs à 0.

**11.** Élément de batterie rechargeable (2, 20, 40) selon la revendication 8, dans lequel le composé présente la composition $Li_xM'_yM''^1_{z1}M''^2_{z2}O_4$, dans laquelle $M''^1$ représente au moins un élément qui est choisi dans le groupe formé par les éléments des groupes 2, 3, 4, 5, 6, 7, 8, 9, 10, 11, 12, 13, 14, 15 et 16 du système périodique des éléments, $M''^2$ représente phosphore, z1 représente un nombre supérieur ou égal à 0 et z2 vaut 1.

**12.** Élément de batterie rechargeable (2, 20, 40) selon la revendication 11, dans lequel le composé présente la composition $Li_xM'_yM''^1_{z1}PO_4$, dans laquelle M' représente fer et $M''^1_{z1}$ représente manganèse, le composé présentant de préférence la composition $Li(Fe_{0,3}Mn_{0,7})PO_4$.

**13.** Élément de batterie rechargeable (2, 20, 40) selon l'une quelconque des revendications précédentes, dans lequel les substituants $R^1$, $R^2$, $R^3$ et $R^4$ du premier sel conducteur sont choisis, indépendamment les uns des autres, dans le groupe formé par

- $C_1$-$C_6$-alkyle ; de préférence $C_2$-$C_4$-alkyle ; de manière particulièrement préférée les groupes alkyle 2-propyle, méthyle et éthyle ;
- $C_2$-$C_6$-alcényle ; de préférence $C_2$-$C_4$-alcényle ; de manière particulièrement préférée les groupes alcényle éthényle et propényle ;
- $C_2$-$C_6$-alcynyle ; de préférence $C_2$-$C_4$-alcynyle ;
- $C_3$-$C_6$-cycloalkyle ;
- phényle ; et
- $C_5$-$C_7$-hétéroaryle.

**14.** Élément de batterie rechargeable (2, 20, 40) selon l'une quelconque des revendications précédentes, dans lequel au moins l'un des substituants $R^1$, $R^2$, $R^3$ et $R^4$ du premier sel conducteur sont substitués par au moins un atome de fluor et/ou par au moins un groupe chimique, le groupe chimique étant choisi dans le groupe formé par $C_1$-$C_4$-alkyle, $C_2$-$C_4$-alcényle, $C_2$-$C_4$-alcynyle, phényle et benzyle.

**15.** Élément de batterie rechargeable (2, 20, 40) selon l'une quelconque des revendications précédentes, dans lequel au moins l'un des substituants $R^1$, $R^2$, $R^3$ et $R^4$ du premier sel conducteur est un groupe $CF_3$ ou un groupe $OSO_2CF_3$.

**16.** Élément de batterie rechargeable (2, 20, 40) selon l'une quelconque des revendications précédentes, dans lequel le premier sel conducteur est choisi dans le groupe formé par

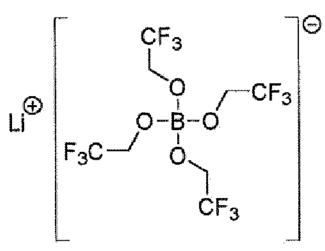

$Li[B(OCH_2CF_3)_4]$

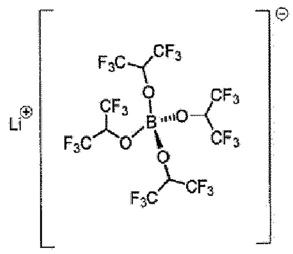

$Li[B(OCH(CF_3)_2)_4]$

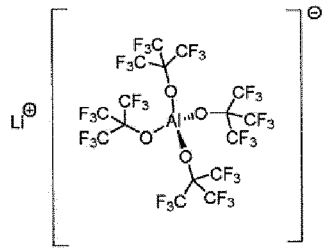

$Li[Al(OC(CF_3)_3)_4]$

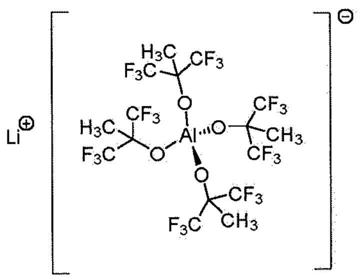

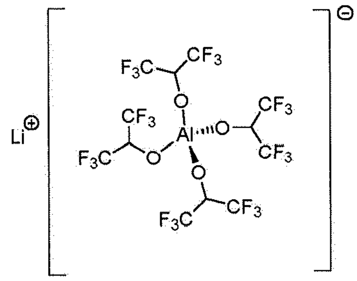

$Li[Al(OC(CH_3)(CF_3)_2)_4]$ $Li[Al(OCH(CF_3)_2)_4]$.

**17.** Élément de batterie rechargeable (2, 20, 40) selon l'une quelconque des revendications précédentes, l'électrolyte contenant au moins un deuxième sel conducteur différent du premier sel conducteur selon la formule (I).

**18.** Élément de batterie rechargeable (2, 20, 40) selon la revendication 17, dans lequel le deuxième sel conducteur de l'électrolyte est un composé de métal alcalin, en particulier un composé de lithium qui est choisi dans le groupe formé par un aluminate, un halogénure, un oxalate, un borate, un phosphate, un arséniate et un gallate.

**19.** Élément de batterie rechargeable (2, 20, 40) selon la revendication 17 ou 18, dans lequel le deuxième sel conducteur de l'électrolyte est un tétrahalogénoaluminate de lithium, en particulier un tétrachloroaluminate de lithium.

**20.** Élément de batterie rechargeable (2, 20, 40) selon l'une quelconque des revendications précédentes, dans lequel l'électrolyte contient au moins un additif.

**21.** Élément de batterie rechargeable (2, 20, 40) selon la revendication 20, dans lequel l'additif de l'électrolyte est choisi dans le groupe formé par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, le tétrafluoro(oxalato)phosphate de lithium, l'oxalate de lithium, la 2-vinylpyridine, la 4-vinylpyridine, les exométhylènecarbonates cycliques, les sultones, les sulfonates cycliques et acycliques, les sulfites acycliques, les sulfinates cycliques et acycliques, les esters organiques d'acides inorganiques, les alcanes acycliques et cycliques qui présentent des alcanes acycliques et cycliques d'un point d'ébullition à 1 bar d'au moins 36°C, les composés aromatiques, les sulfonylimides halogénés cycliques et acycliques, les esters de phosphate halogénés cycliques et acycliques, les phosphines halogénées cycliques et acycliques, les phosphites halogénés cycliques et acycliques, les phosphazènes halogénés cycliques et acycliques, les silylamines halogénées cycliques et acycliques, les esters halogénés halogénés cycliques et acycliques, les amides halogénés cycliques et acycliques, les anhydrides halogénés cycliques et acycliques et les hétérocycles organiques halogénés.

**22.** Élément de batterie rechargeable (2, 20, 40) selon l'une quelconque des revendications précédentes, dans lequel l'électrolyte présente la composition

(i) 5 à 99,4% en poids de dioxyde de soufre,
(ii) 0,6 à 95% en poids du premier sel conducteur
(iii) 0 à 25% en poids du deuxième sel conducteur et
(iv) 0 à 10% en poids de l'additif,

par rapport au poids total de la composition électrolytique.

**23.** Élément de batterie rechargeable (2, 20, 40) selon l'une quelconque des revendications précédentes, dans lequel la concentration en quantité de matière du premier sel conducteur se situe dans la plage de 0,01 mole/l à 10 moles/l, de préférence de 0,05 mole/l à 10 moles/l, plus préférablement de 0,1 mole/l à 6 moles/l et de manière particulièrement préférée de 0,2 mole/l à 3,5 moles/l par rapport au volume total de l'électrolyte.

**24.** Élément de batterie rechargeable (2, 20, 40) selon l'une quelconque des revendications précédentes, dans lequel l'électrolyte contient au moins 0,1 mole de $SO_2$, de préférence au moins 1 mole de $SO_2$, plus préférablement au moins 5 moles de $SO_2$, plus préférablement au moins 10 moles de $SO_2$ et de manière particulièrement préférée au moins 20 moles de $SO_2$ par mole de sel conducteur.

**25.** Élément de batterie rechargeable (2, 20, 40) selon l'une quelconque des revendications précédentes, dans lequel le métal actif est

- un métal alcalin, en particulier lithium ou sodium ;
- un métal alcalino-terreux, en particulier calcium ;
- un métal du groupe 12 du système périodique des éléments, en particulier zinc ; ou
- aluminium

**26.** Élément de batterie rechargeable (2, 20, 40) selon l'une quelconque des revendications précédentes, dans lequel l'électrode positive (4, 23, 44) contient au moins un composé métallique qui est choisi dans le groupe formé par un oxyde métallique, un halogénure métallique et un phosphate métallique, le métal du composé métallique étant de préférence un métal de transition des nombres atomiques 22 à 28 du système périodique des éléments, en particulier cobalt, nickel, manganèse ou fer.

**27.** Élément de batterie rechargeable (2, 20, 40) selon l'une quelconque des revendications précédentes, dans lequel l'électrode positive (4, 23, 44) contient au moins un composé métallique qui présente la structure chimique d'un spinelle, d'un oxyde stratifié, d'un composé de conversion ou d'un composé polyanionique.

**28.** Élément de batterie rechargeable (2, 20, 40) selon l'une quelconque des revendications précédentes, dans lequel l'électrode positive (4, 23, 44) et/ou l'électrode négative (5, 22, 45) présente(nt) un élément de dérivation (26, 27) qui est de préférence conçu

- soit de manière planaire sous forme d'une tôle métallique ou d'une feuille métallique soit
- de manière tridimensionnelle sous forme d'une structure métallique poreuse, en particulier sous forme d'une mousse métallique (18).

**29.** Élément de batterie rechargeable (2, 20, 40) selon l'une quelconque des revendications précédentes, dans lequel l'électrode positive (4, 23, 44) et/ou l'électrode négative (5, 22, 45) contien(nen)t au moins un liant, de préférence un liant fluoré, en particulier un poly(fluorure de vinylidène) et/ou un terpolymère de tétrafluoroéthylène, d'hexafluoropropylène et de fluorure de vinylidène, ou un liant qui est constitué par un polymère qui est formé à partir de motifs structuraux monomères d'un acide carbonique conjugué ou du sel alcalin, alcalino-terreux ou d'ammonium de cet acide carbonique conjugué ou d'une combinaison de ceux-ci, ou un liant qui est constitué par un polymère qui est à base de motifs structuraux monomères de styrène et de butadiène ou un liant du groupe des carboxyméthylcelluloses, le liant étant de préférence présent en une concentration d'au plus 20% en poids, plus préférablement d'au plus 15% en poids, encore plus préférablement d'au plus 10% en poids, encore plus préférablement d'au plus 7% en poids, encore plus préférablement d'au plus 5% en poids et de manière particulièrement préférée d'au plus 2% en poids par rapport au poids total de l'électrode positive.

**30.** Élément de batterie rechargeable (2, 20, 40) selon l'une quelconque des revendications précédentes, qui comprend plusieurs électrodes négatives (5, 22, 45) et plusieurs électrodes positives (4, 23, 44), qui sont agencées en alternance de manière empilée dans le boîtier (1, 28), les électrodes positives (4, 23, 44) et les électrodes négatives (5, 22, 45) étant de préférence séparées électriquement les unes des autres à chaque fois par des séparateurs (11).

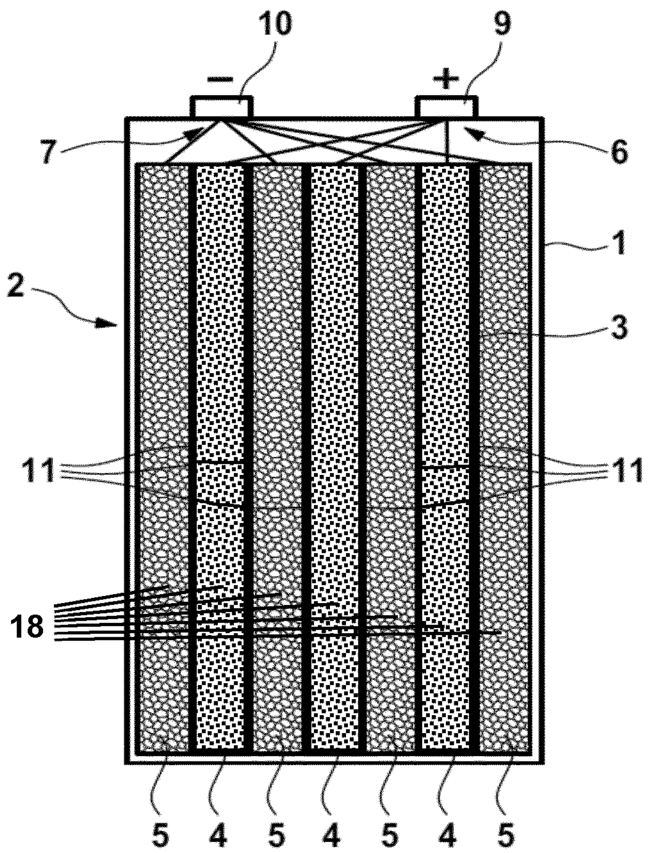


Fig. 1

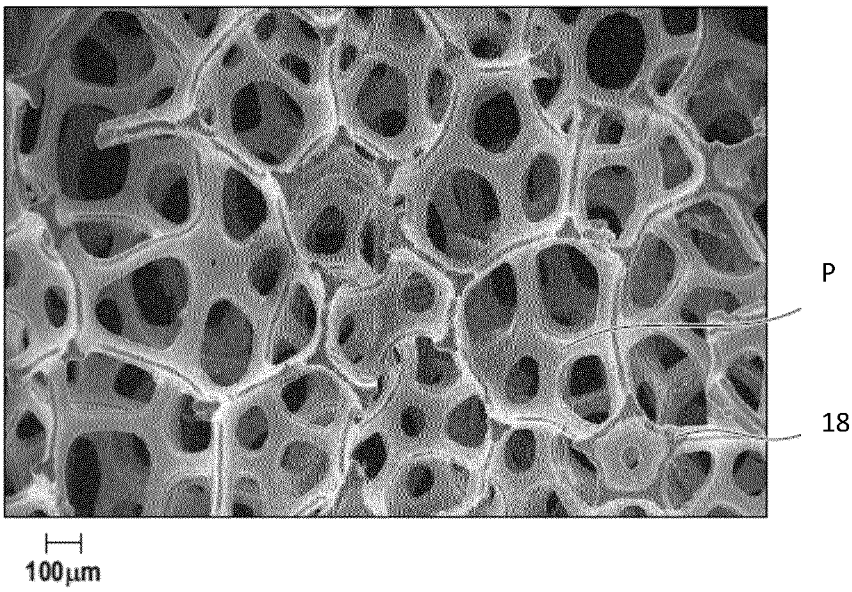


Fig. 2

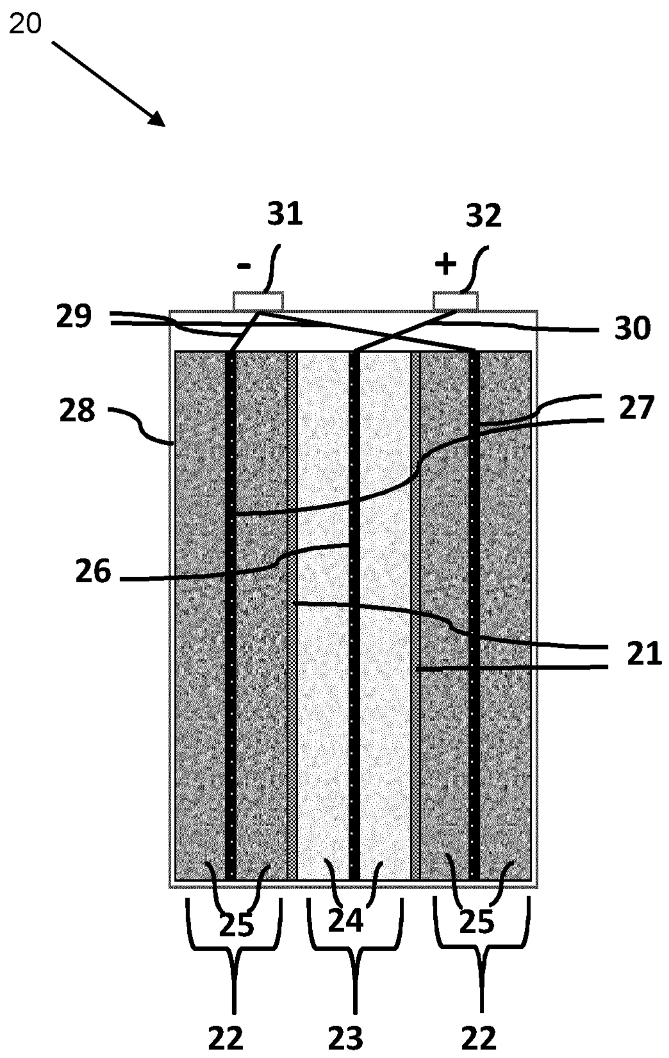


Fig. 3

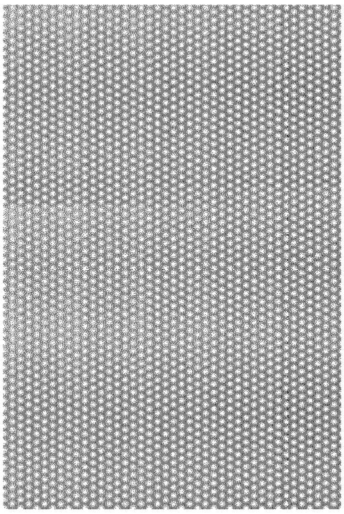

Fig. 4

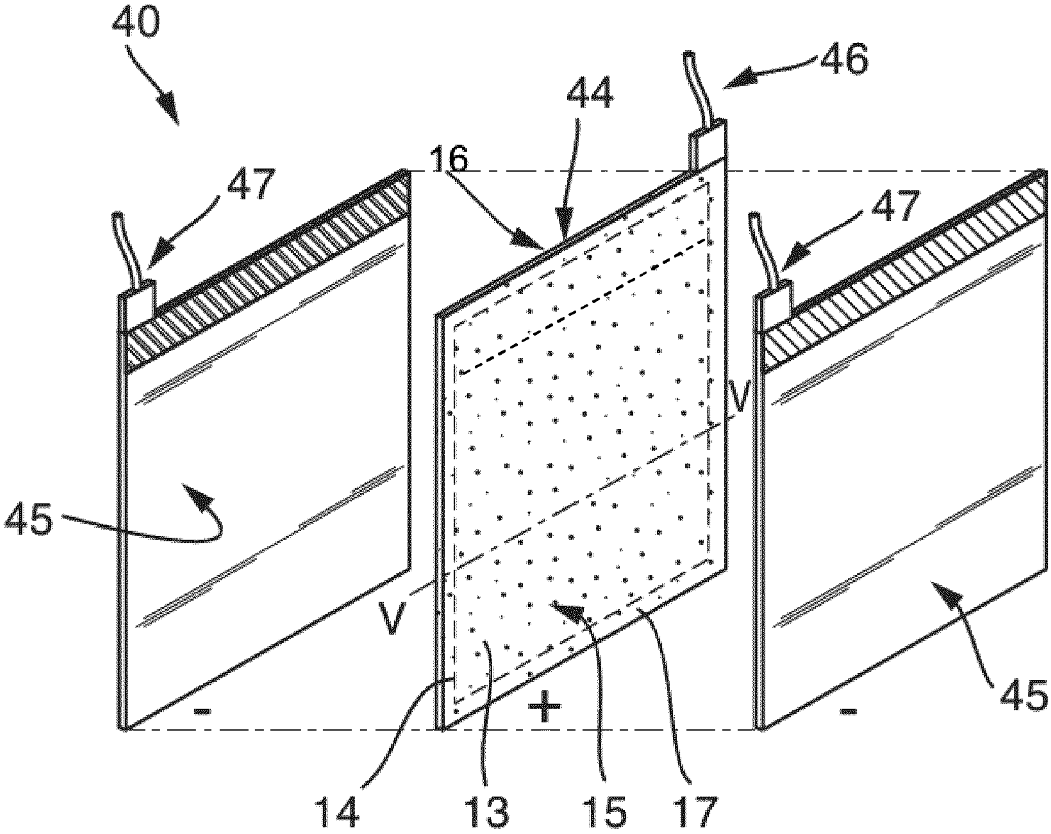


Fig. 5

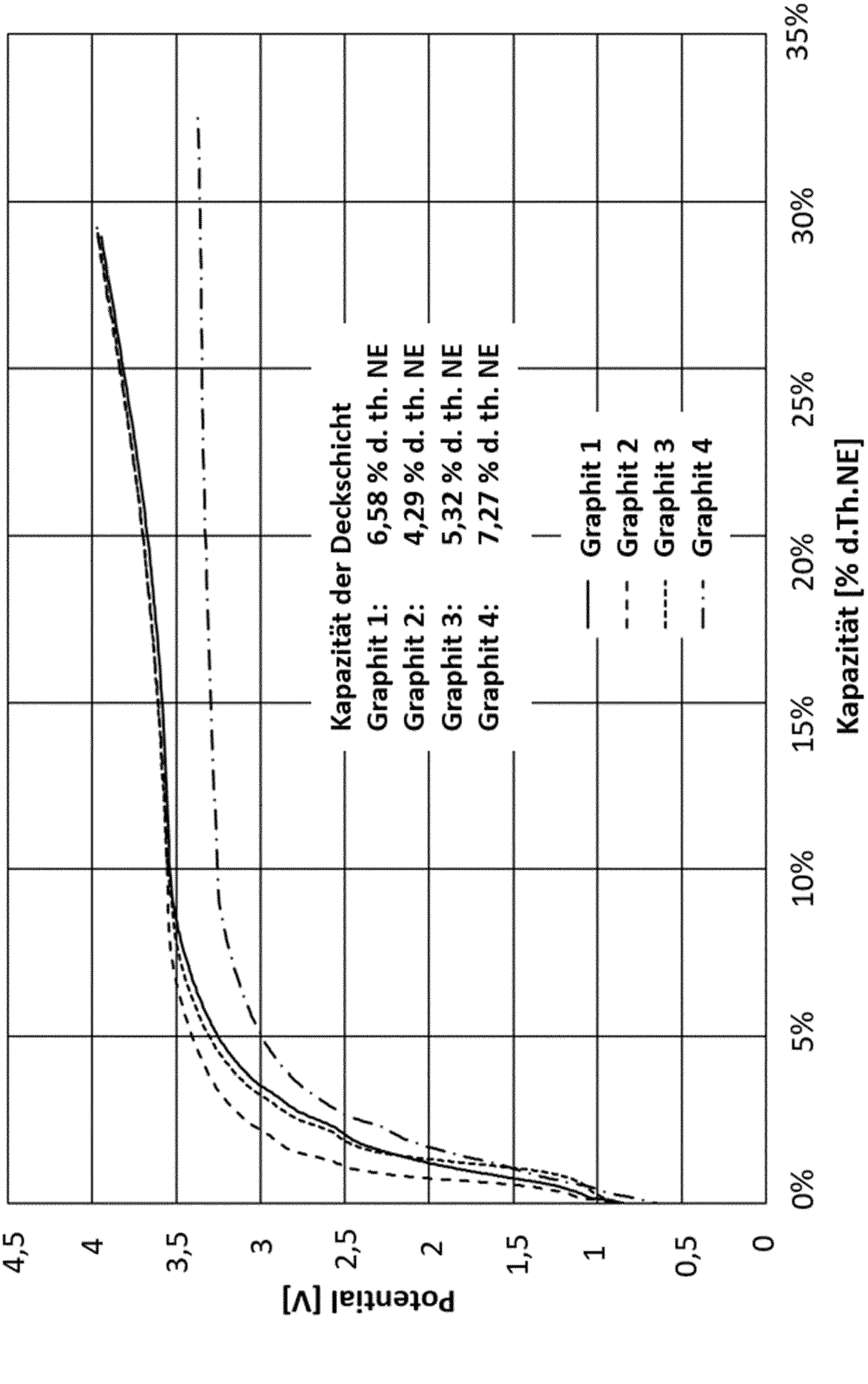
Potential [V]
0
0,5
1
1,5
2
2,5
3
3,5
4
4,5
0%
5%
10%
15%
20%
25%
30%
35%
Kapazität [% d.Th.NE]
Kapazität der Deckschicht
Graphit 1: 6,58 % d. th. NE
Graphit 2: 4,29 % d. th. NE
Graphit 3: 5,32 % d. th. NE
Graphit 4: 7,27 % d. th. NE
Graphit 1
Graphit 2
Graphit 3
Graphit 4

**Fig. 6**

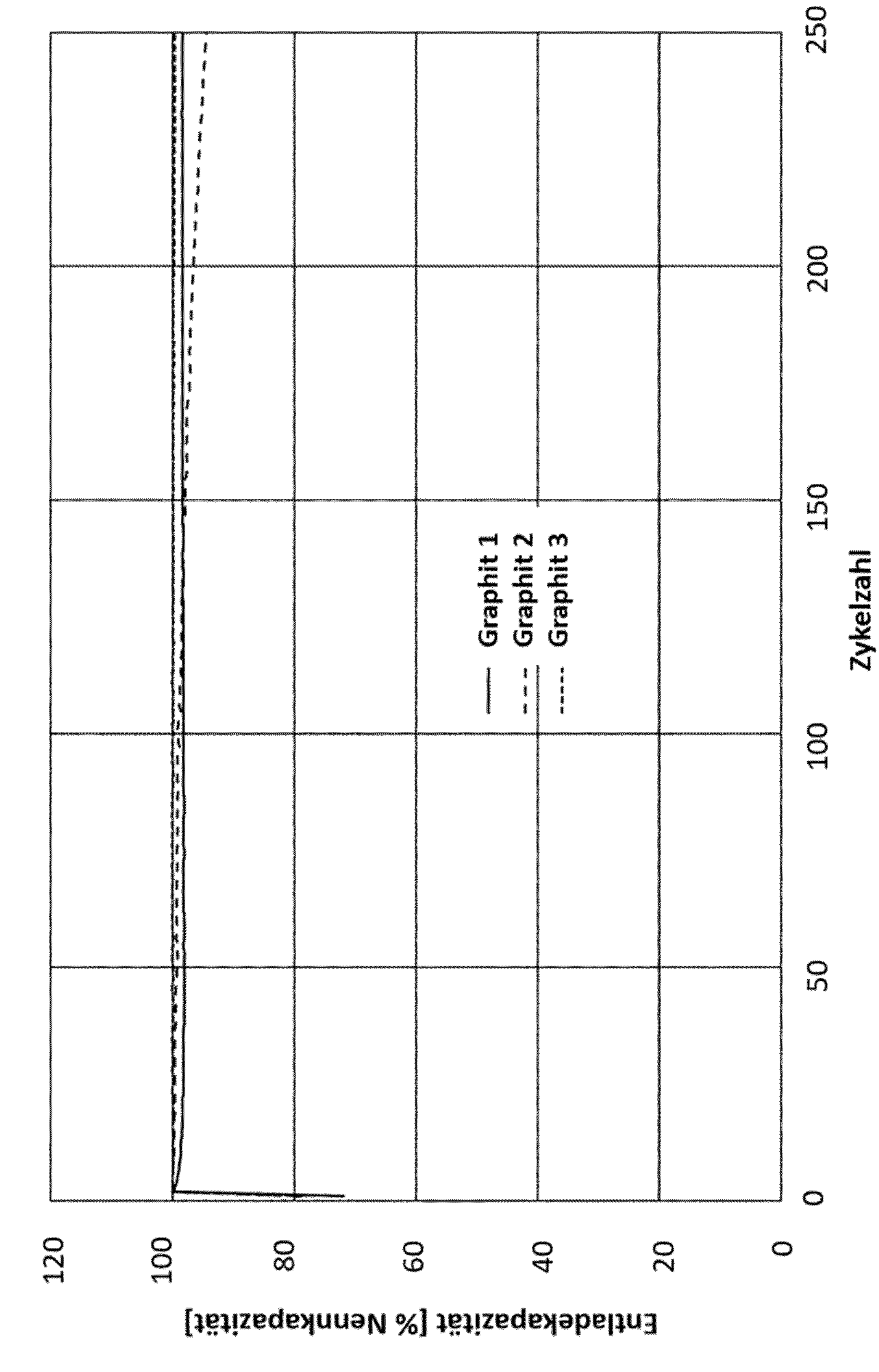
Entladekapazität [% Nennkapazität]
120
100
80
60
40
20
0
Zykelzahl
0
50
100
150
200
250
Graphit 1
Graphit 2
Graphit 3

Fig. 7

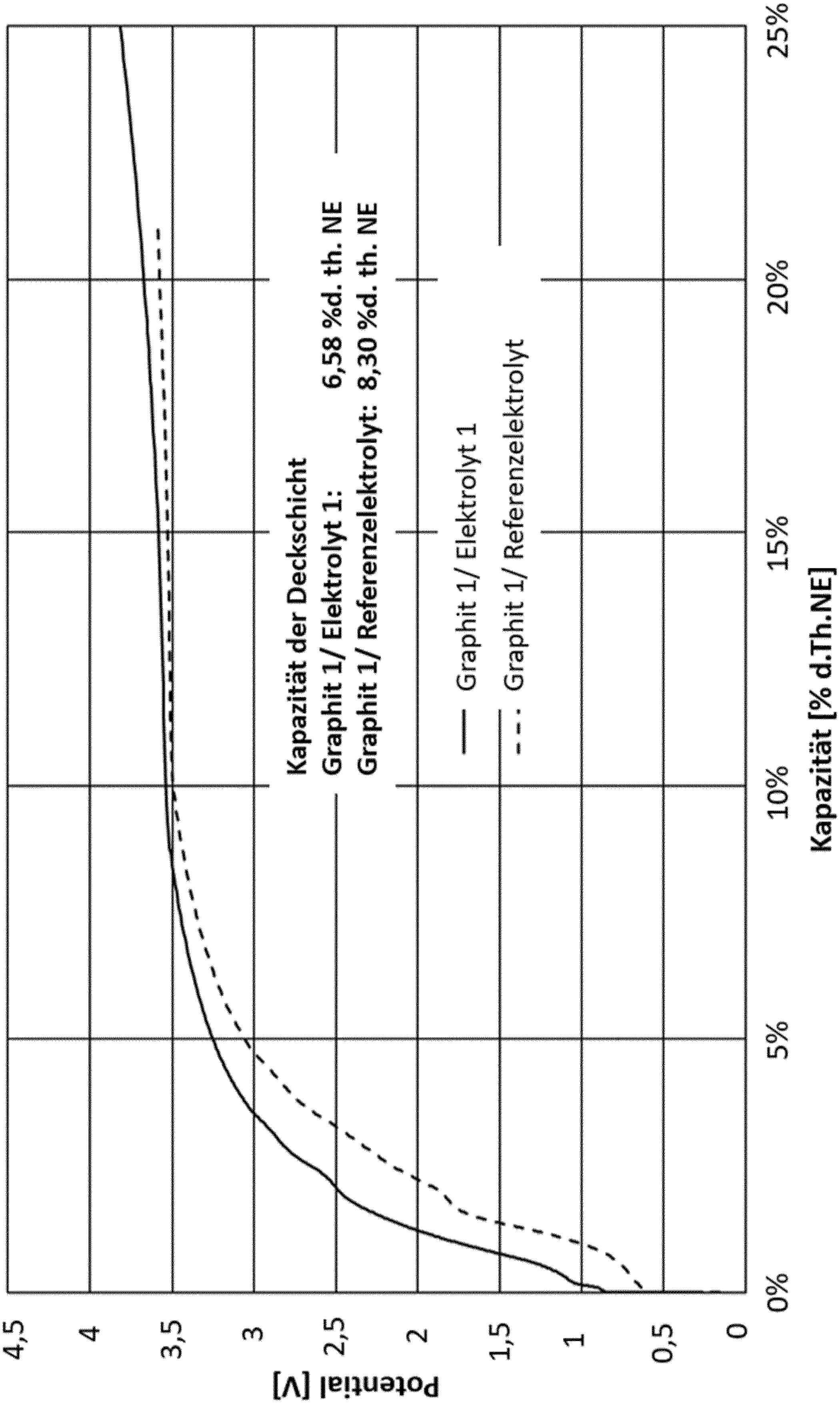
Potential [V]
4,5
4
3,5
3
2,5
2
1,5
1
0,5
0
0%
5%
10%
15%
20%
25%
Kapazität [% d.Th.NE]
Kapazität der Deckschicht
Graphit 1/ Elektrolyt 1: 6,58 %d. th. NE
Graphit 1/ Referenzelektrolyt: 8,30 %d. th. NE
Graphit 1/ Elektrolyt 1
Graphit 1/ Referenzelektrolyt

Fig. 8

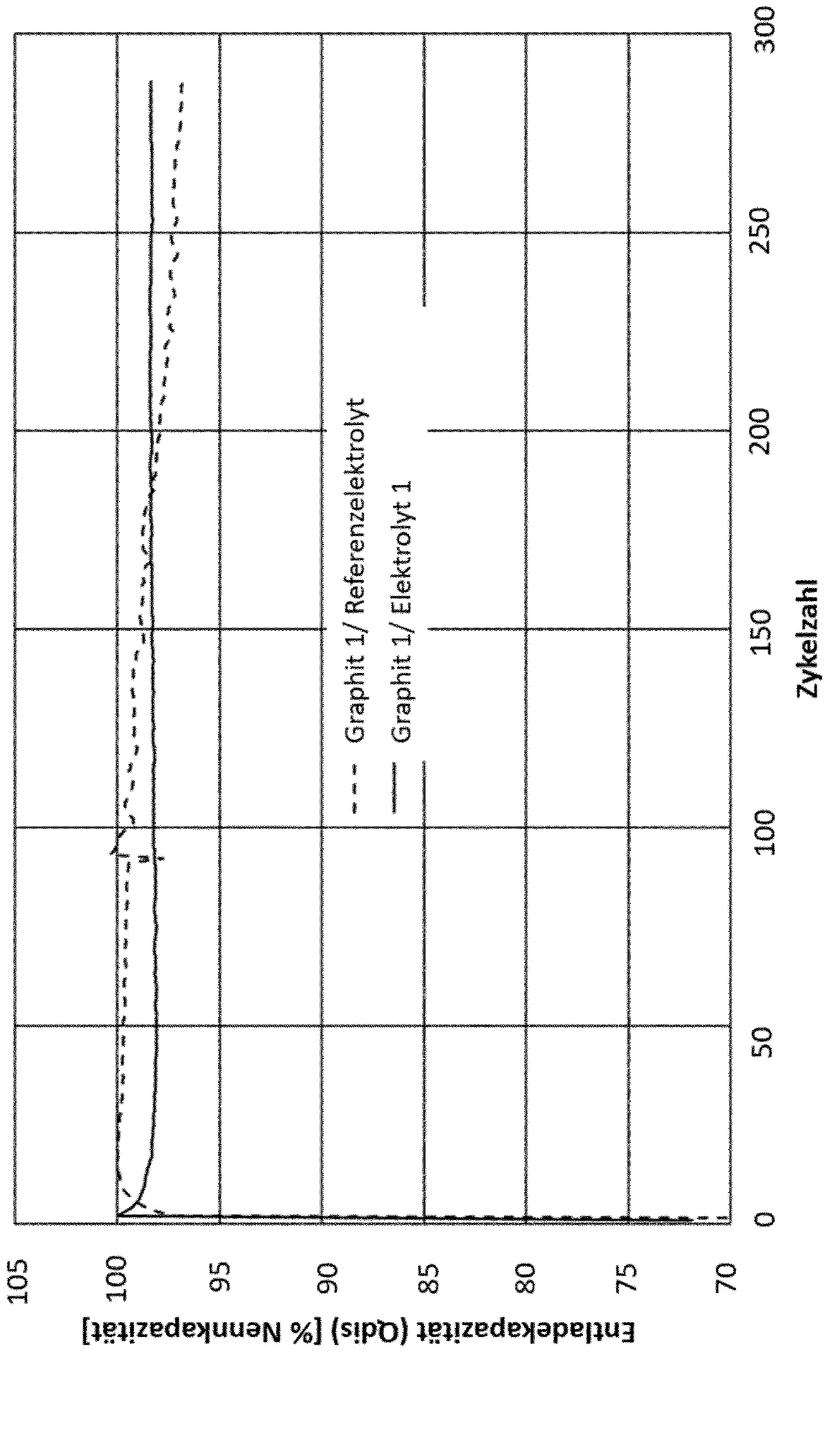

Entladekapazität (Qdis) [% Nennkapazität]
105
100
95
90
85
80
75
70
0
50
100
150
200
250
300
Zykelzahl
Graphit 1/ Referenzelektrolyt
Graphit 1/ Elektrolyt 1


Fig. 9

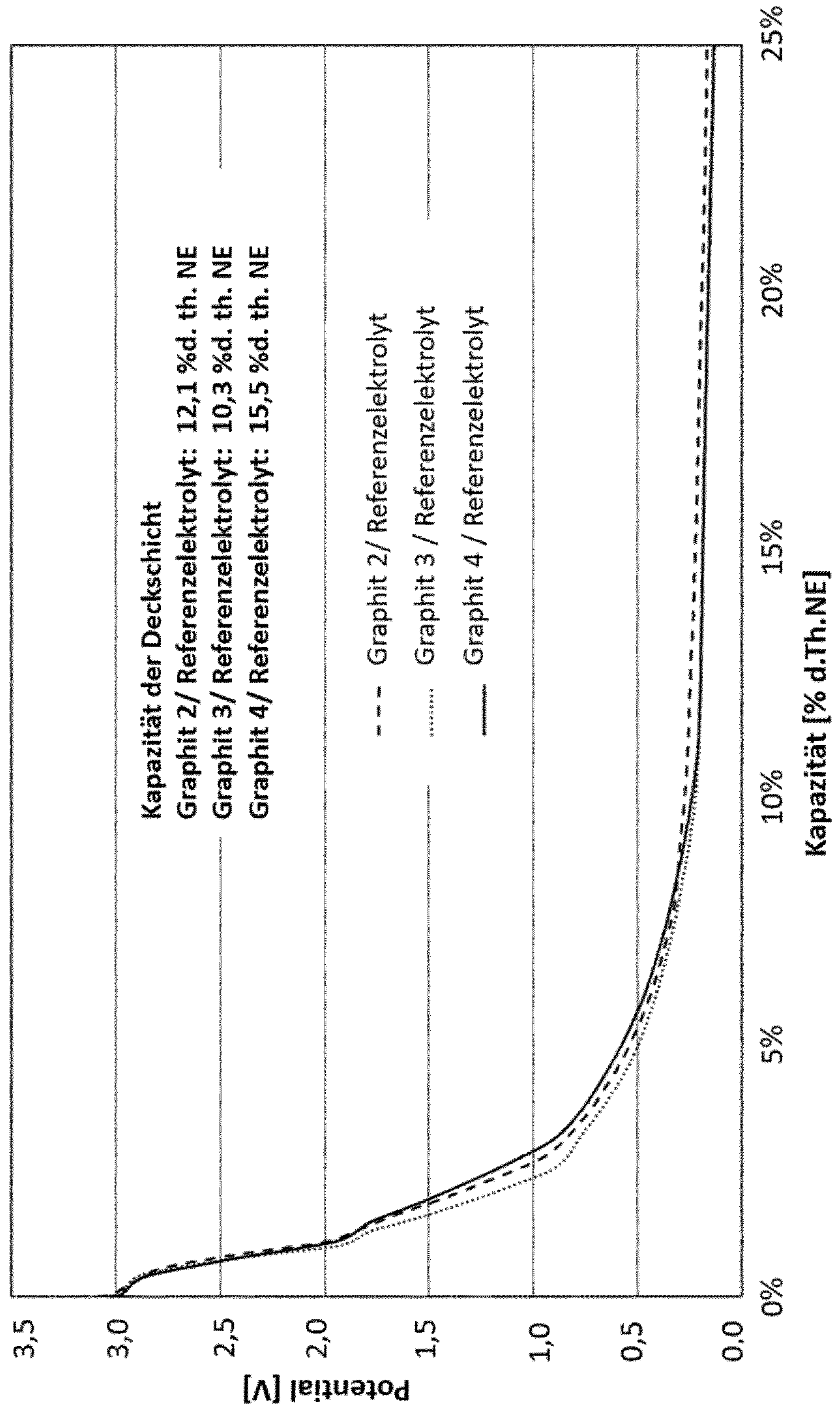
Kapazität der Deckschicht
Graphit 2/ Referenzelektrolyt: 12,1 %d. th. NE
Graphit 3/ Referenzelektrolyt: 10,3 %d. th. NE
Graphit 4/ Referenzelektrolyt: 15,5 %d. th. NE
Graphit 2/ Referenzelektrolyt
Graphit 3 / Referenzelektrolyt
Graphit 4 / Referenzelektrolyt
Potential [V]
3,5
3,0
2,5
2,0
1,5
1,0
0,5
0,0
0%
5%
10%
15%
20%
25%
Kapazität [% d.Th.NE]

Fig. 10

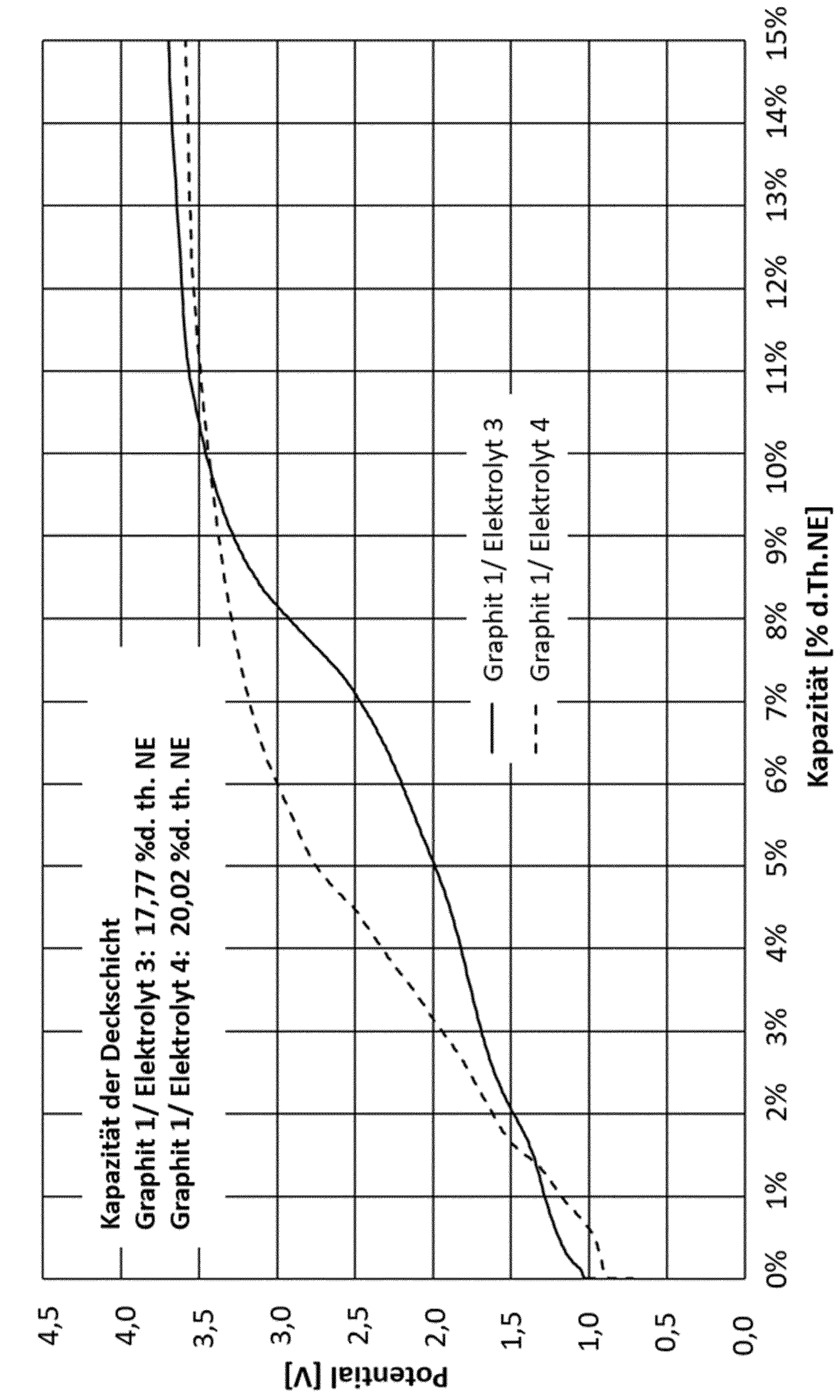
Kapazität der Deckschicht
Graphit 1/ Elektrolyt 3: 17,77 %d. th. NE
Graphit 1/ Elektrolyt 4: 20,02 %d. th. NE
Graphit 1/ Elektrolyt 3
Graphit 1/ Elektrolyt 4
Potential [V]
0,0
0,5
1,0
1,5
2,0
2,5
3,0
3,5
4,0
4,5
Kapazität [% d.Th.NE]
0%
1%
2%
3%
4%
5%
6%
7%
8%
9%
10%
11%
12%
13%
14%
15%

Fig. 11

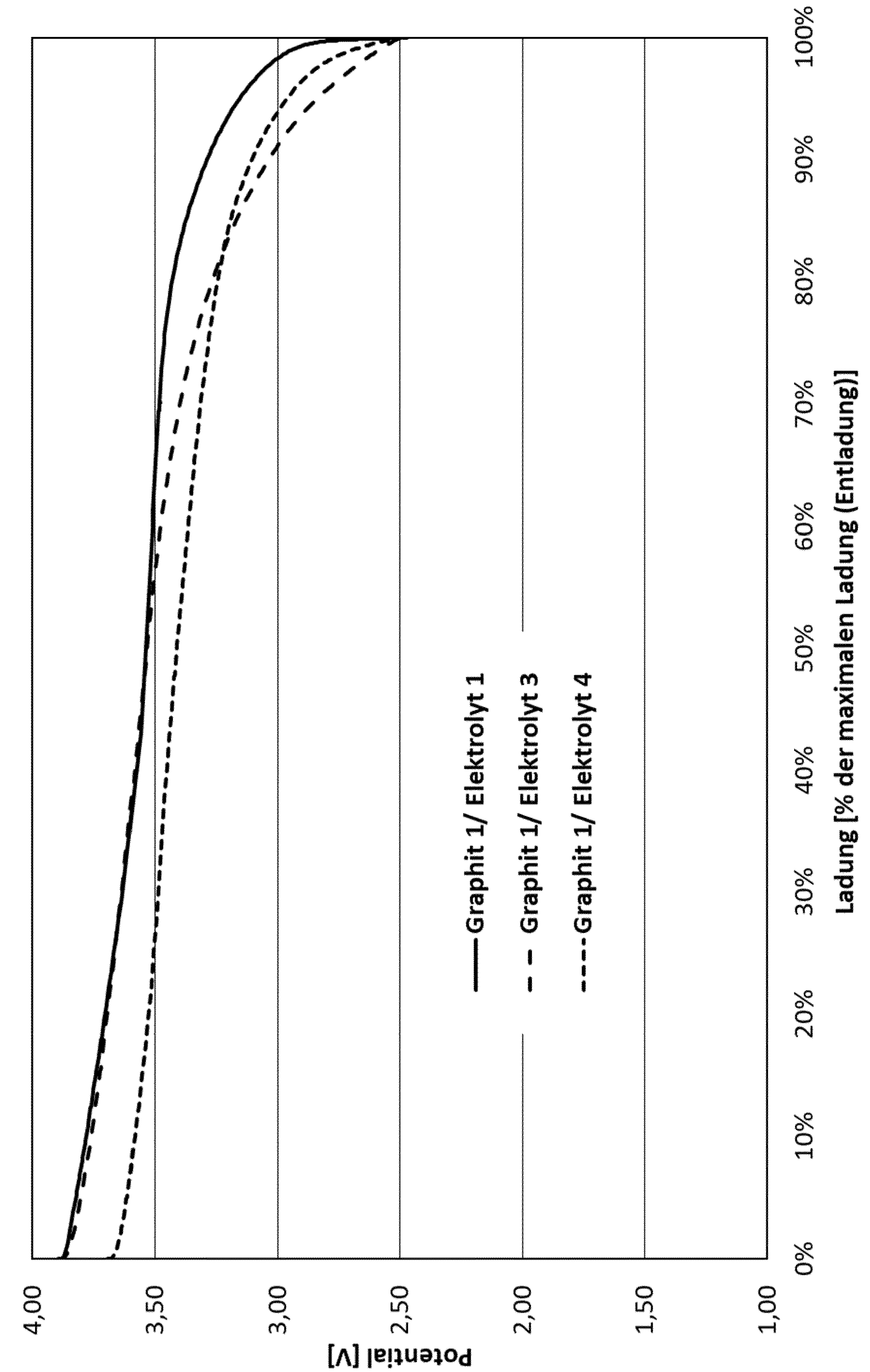
Potential [V]
4,00
3,50
3,00
2,50
2,00
1,50
1,00
0%
10%
20%
30%
40%
50%
60%
70%
80%
90%
100%
Ladung [% der maximalen Ladung (Entladung)]
Graphit 1/ Elektrolyt 1
Graphit 1/ Elektrolyt 3
Graphit 1/ Elektrolyt 4

Fig. 12

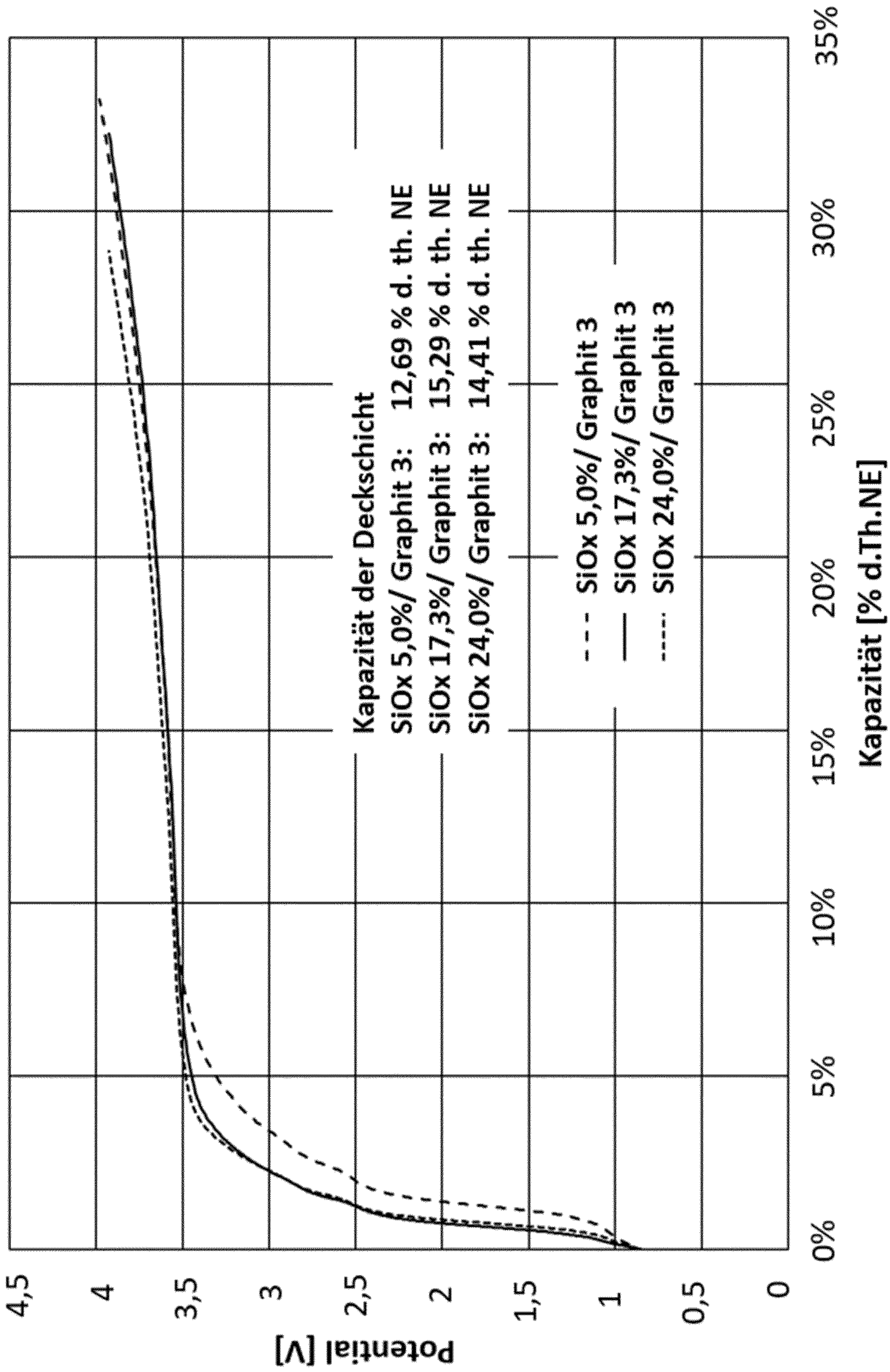
Potential [V]
4,5
4
3,5
3
2,5
2
1,5
1
0,5
0
0%
5%
10%
15%
20%
25%
30%
35%
Kapazität [% d.Th.NE]
Kapazität der Deckschicht
SiOx 5,0%/ Graphit 3: 12,69 % d. th. NE
SiOx 17,3%/ Graphit 3: 15,29 % d. th. NE
SiOx 24,0%/ Graphit 3: 14,41 % d. th. NE
SiOx 5,0%/ Graphit 3
SiOx 17,3%/ Graphit 3
SiOx 24,0%/ Graphit 3

Fig. 13

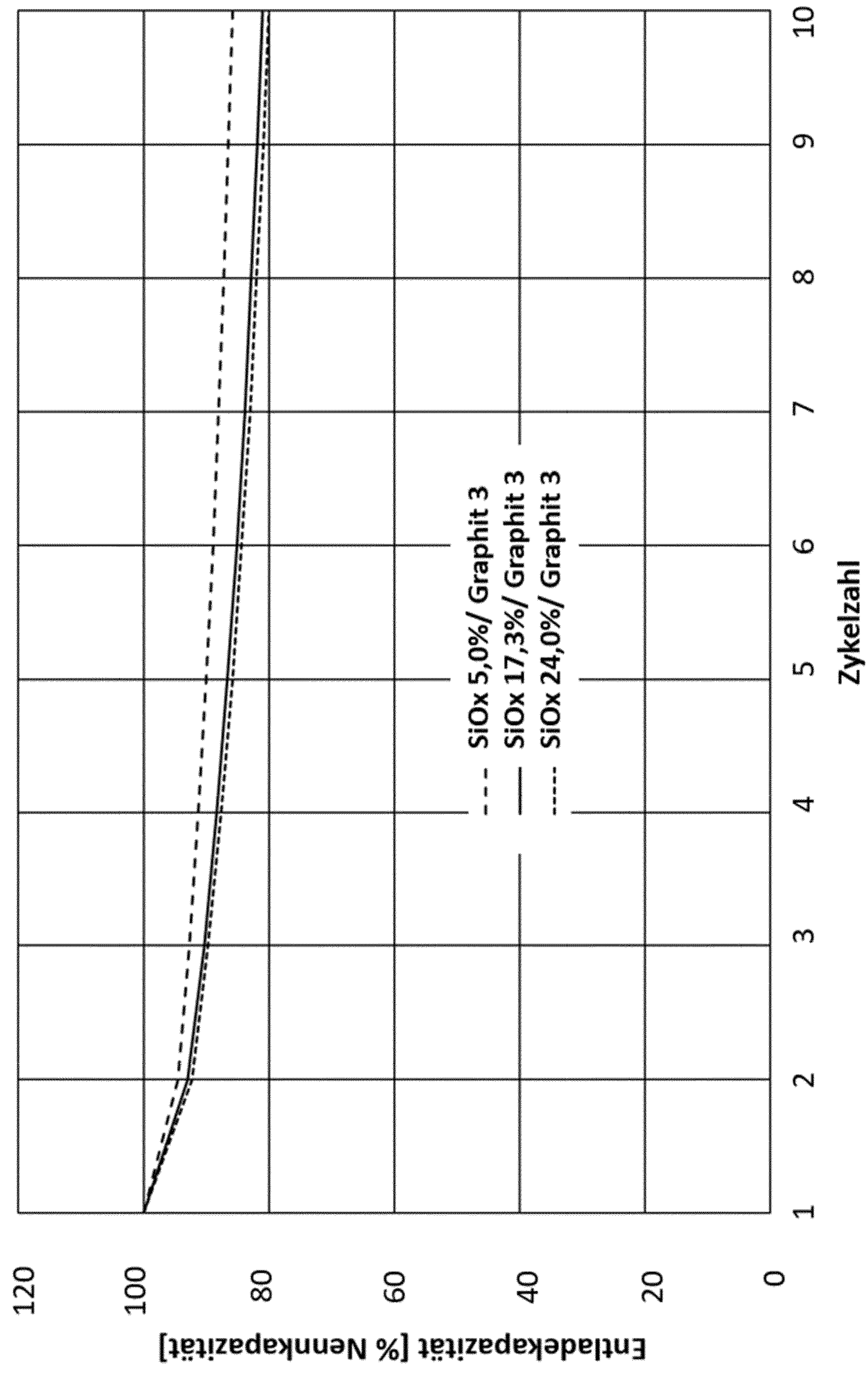
Entladekapazität [% Nennkapazität]
120
100
80
60
40
20
0
Zykelzahl
1
2
3
4
5
6
7
8
9
10
SiOx 5,0%/ Graphit 3
SiOx 17,3%/ Graphit 3
SiOx 24,0%/ Graphit 3

Fig. 14

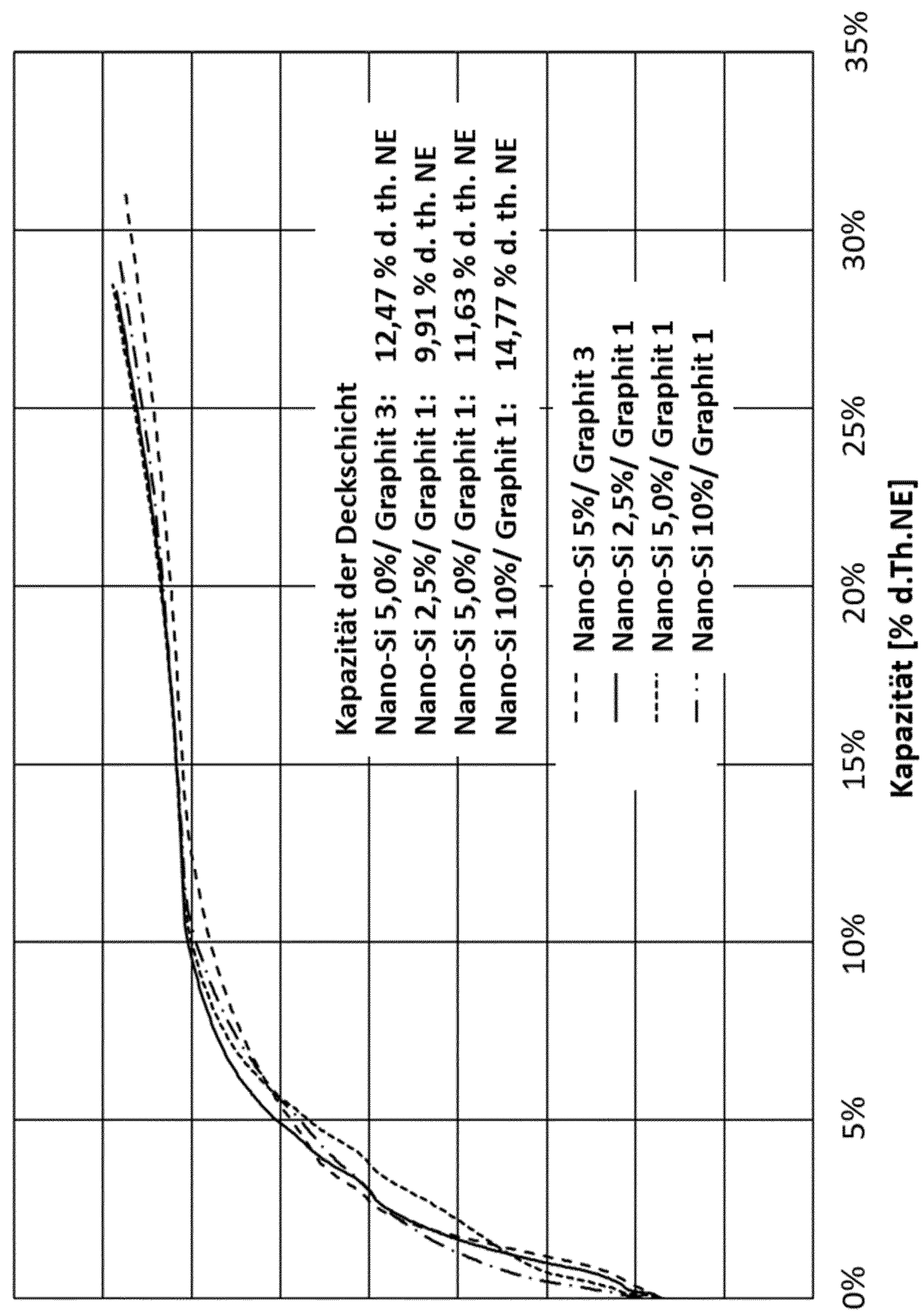
Kapazität der Deckschicht
Nano-Si 5,0%/ Graphit 3: 12,47 % d. th. NE
Nano-Si 2,5%/ Graphit 1: 9,91 % d. th. NE
Nano-Si 5,0%/ Graphit 1: 11,63 % d. th. NE
Nano-Si 10%/ Graphit 1: 14,77 % d. th. NE
Nano-Si 5%/ Graphit 3
Nano-Si 2,5%/ Graphit 1
Nano-Si 5,0%/ Graphit 1
Nano-Si 10%/ Graphit 1
Potential [V]
0
0,5
1
1,5
2
2,5
3
3,5
4
4,5
Kapazität [% d.Th.NE]
0%
5%
10%
15%
20%
25%
30%
35%

Fig. 15

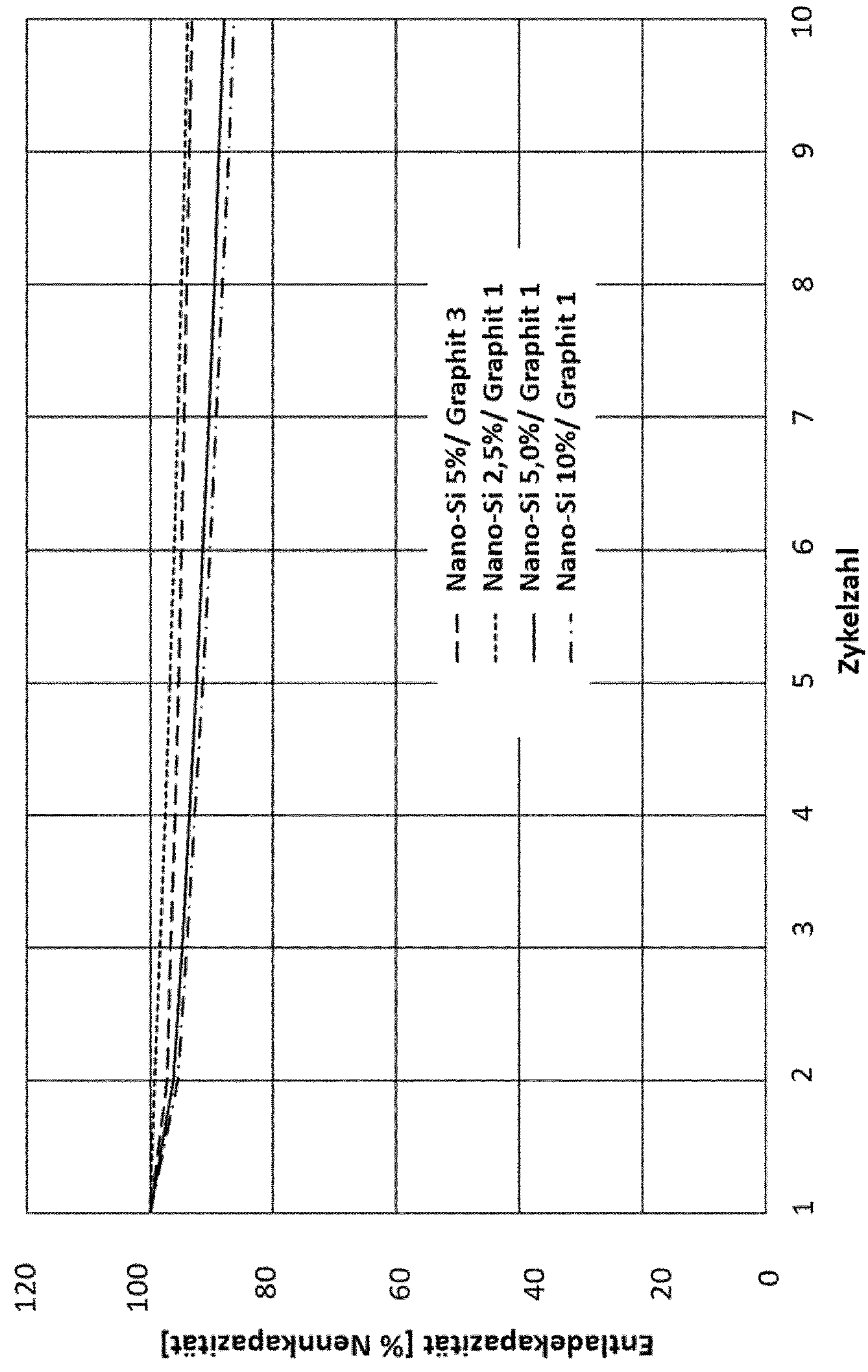
Entladekapazität [% Nennkapazität]
120
100
80
60
40
20
0
1
2
3
4
5
6
7
8
9
10
Zykelzahl
Nano-Si 5%/ Graphit 3
Nano-Si 2,5%/ Graphit 1
Nano-Si 5,0%/ Graphit 1
Nano-Si 10%/ Graphit 1

Fig. 16

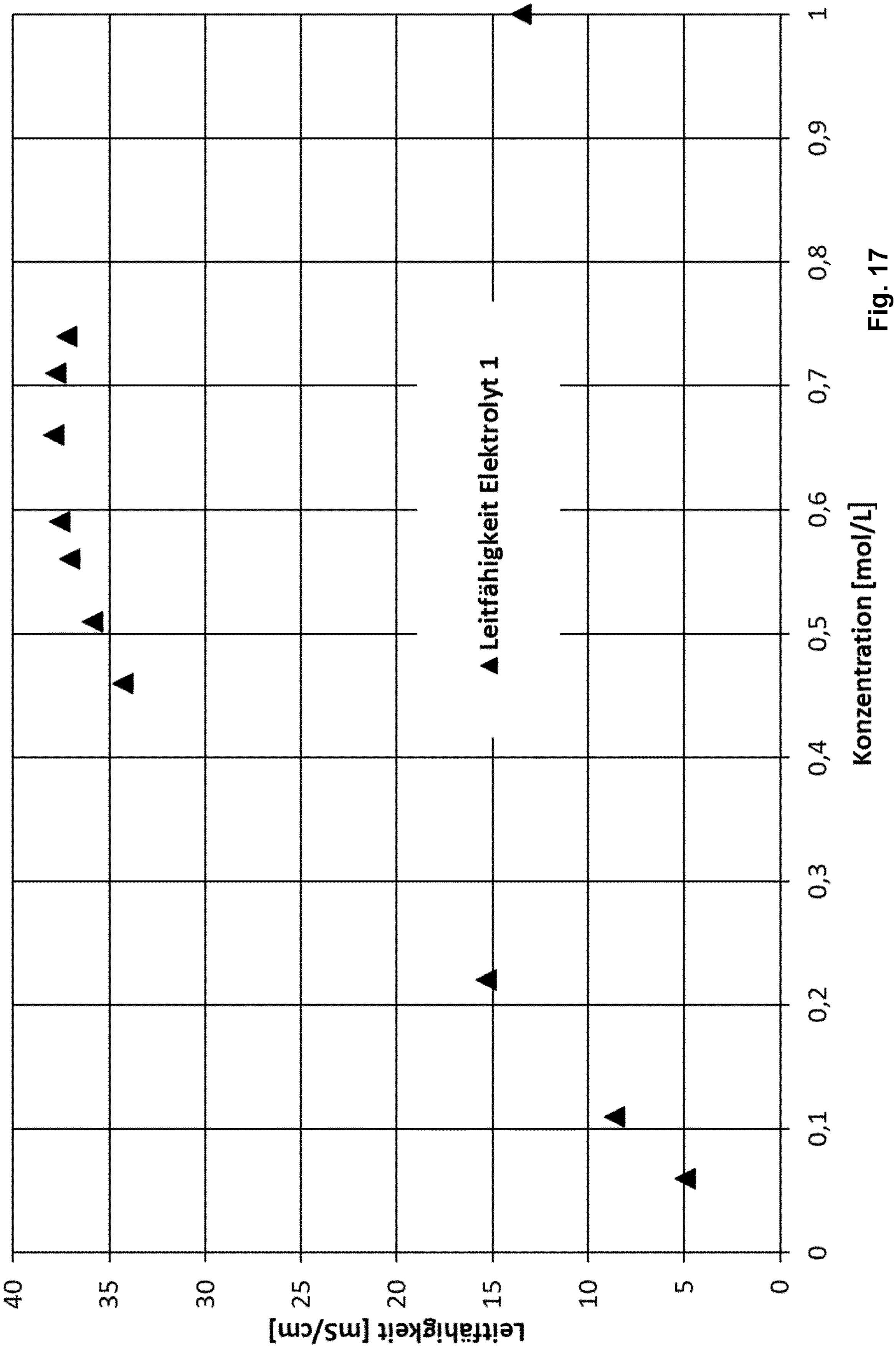
Leitfähigkeit [mS/cm]
0
5
10
15
20
25
30
35
40
Konzentration [mol/L]
0
0,1
0,2
0,3
0,4
0,5
0,6
0,7
0,8
0,9
1
Leitfähigkeit Elektrolyt 1

Fig. 17

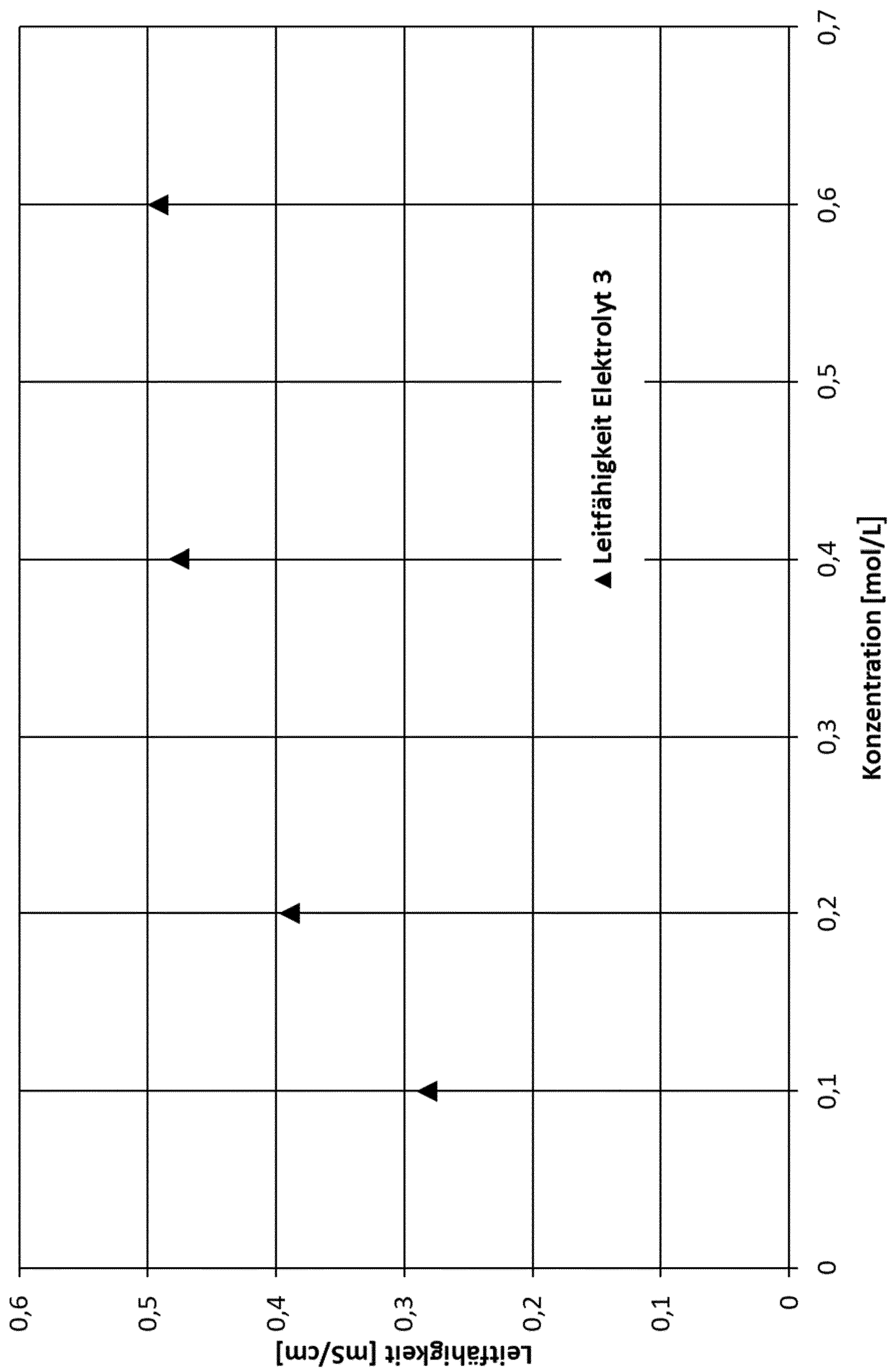
▲ Leitfähigkeit Elektrolyt 3
Leitfähigkeit [mS/cm]
0
0,1
0,2
0,3
0,4
0,5
0,6
Konzentration [mol/L]
0
0,1
0,2
0,3
0,4
0,5
0,6
0,7

Fig. 18

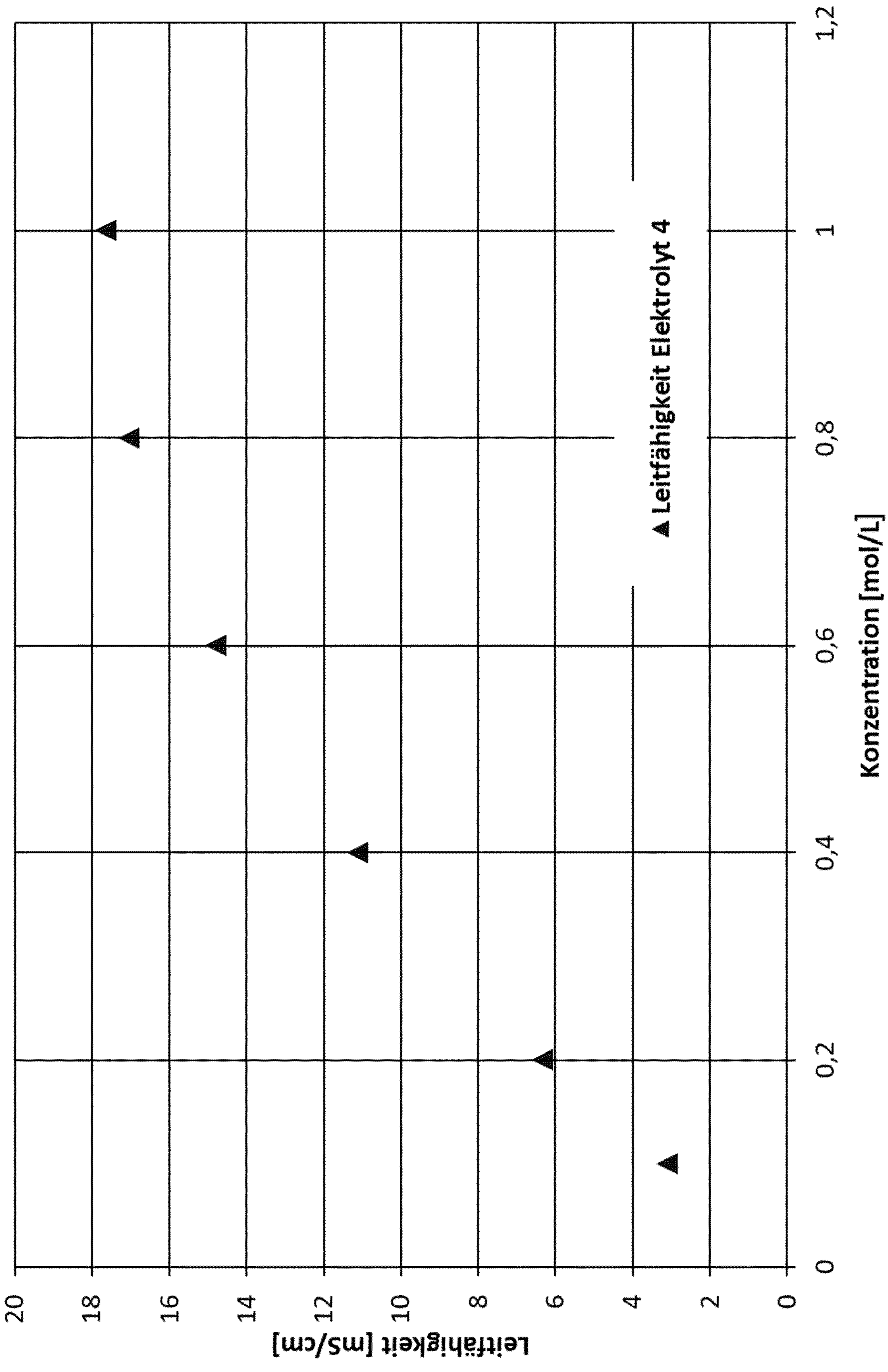

Leitfähigkeit [mS/cm]
20
18
16
14
12
10
8
6
4
2
0
Konzentration [mol/L]
0
0,2
0,4
0,6
0,8
1
1,2
Leitfähigkeit Elektrolyt 4


Fig. 19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- EP 2999037 A1
- US 2003157409 A1
- EP 2290738 B1
- EP 2954588 B1


### In der Beschreibung aufgeführte Nicht-Patentliteratur


- **I. KROSSING.** *Chem. Eur. J.,* 2001, vol. 7, 490
- **S. M. IVANOVA et al.** *Chem. Eur. J.,* 2001, vol. 7, 503
- **TSUJIOKA et al.** *J. Electrochem. Soc.,* 2004, vol. 151, A1418